# NEUE EUROPÄISCHE PATENTSCHRIFT

(11) **EP 2 989 676 B2**
(45) Veröffentlichungstag und Bekanntmachung des Hinweises auf die Entscheidung über den Einspruch: **04.12.2019**
(45) Hinweis auf die Patenterteilung: 01.03.2017
(21) Anmeldenummer: 14715945.3
(22) Anmeldetag: 09.04.2014
(51) Int. Cl.: H01M 2/20, H01M 10/42, H01M 10/48, B60L 50/64, H01R 13/66, H01M 2/10, H01R 12/70, H01R 13/645

(54) **ZELLKONTAKTIERUNGSSYSTEM FÜR EINE ELEKTROCHEMISCHE VORRICHTUNG**
CELL CONTACTING SYSTEM FOR AN ELECTROCHEMICAL DEVICE
SYSTÈME DE MISE EN CONTACT D'ÉLÉMENTS POUR UN DISPOSITIF ÉLECTROCHIMIQUE

(30) Priorität: 23.04.2013 DE 102013207357
(43) Veröffentlichungstag der Anmeldung: 02.03.2016
(73) Patentinhaber: ElringKlinger AG, 72581 Dettingen (DE)
(72) Erfinder: FRITZ, Wolfgang, 72555 Metzingen (DE); KAZMAIER, Stefan, 73230 Kirchheim (DE)
(74) Vertreter: Hoeger, Stellrecht & Partner Patentanwälte mbB
(86) Internationale Anmeldenummer: PCT/EP2014/057137
(87) Internationale Veröffentlichungsnummer: WO 2014/173684

(56) Entgegenhaltungen:
- EP-A1- 2 639 857
- EP-A1- 2 711 726
- EP-A2- 2 530 777
- EP-A2- 2 530 777
- EP-A2- 2 672 284
- WO-A1-2008/018714
- WO-A1-2013/090649
- WO-A2-2010/031856
- AT-A1- 511 119
- DE-A1-102009 050 315
- DE-A1-102011 079 895
- DE-A1-102012 209 615
- US-A1- 2012 301 747
- US-A1- 2012 323 511
- US-A1- 2012 323 511
- US-A1- 2013 002 016
- US-A1- 2013 002 016

## Beschreibung

Die vorliegende Erfindung betrifft ein Zellkontaktierungssystem für eine elektrochemische Vorrichtung, die mehrere elektrochemische Zellen umfasst, wobei das Zellkontaktierungssystem ein Stromleitungssystem mit einem oder mehreren Zellverbindern zum elektrisch leitenden Verbinden von Zellterminals verschiedener elektrochemischer Zellen,
ein Signalleitungssystem mit einer oder mehreren Signalleitungen zum elektrisch leitenden Verbinden jeweils einer Signalquelle mit einem Signalleitungsanschluss des Zellkontaktierungssystems und
eine Überwachungseinheit zur Überwachung von Signalen der Signalquellen umfasst.

Ein solches Zellkontaktierungssystem dient dazu, einerseits mittels des Stromleitungssystems das Fließen eines Leistungsstroms von und zu den elektrochemischen Zellen der elektrochemischen Vorrichtung zu ermöglichen und andererseits mittels des Signalleitungssystems und der Überwachungseinheit eine Einzelzellüberwachung hinsichtlich physikalischer Messgrößen wie beispielsweise der Spannung und der Temperatur zu bewerkstelligen. Hierzu werden beispielsweise Potentialunterschiede zwischen verschiedenen Zellverbindern gemessen und/oder Temperaturen in der Nähe der Zellverbinder mittels geeigneter Temperatursensoren erfasst. Die Signalquellen oder Messstellen sind durch das Signalleitungssystem elektrisch leitend mit dem als Schnittstelle zu der Überwachungseinheit der elektrochemischen Vorrichtung dienenden Signalleitungsanschluss verbunden.

Bei bekannten Zellkontaktierungssystemen ist die Überwachungseinheit in räumlicher Distanz von dem Signalleitungsanschluss des Signalleitungssystems angeordnet und über ein Verbindungskabel mit dem Signalleitungsanschluss verbunden.

Der vorliegenden Erfindung liegt die Aufgabe zugrunde, ein Zellkontaktierungssystem mit Überwachungseinheit der eingangs genannten Art zu schaffen, welche kompakt aufgebaut ist und aus einer geringeren Anzahl von Teilen montierbar ist.

Diese Aufgabe wird durch ein Zellkontaktierungssystem nach anspruch 1 gelöst.

Der erfindungsgemäßen Lösung liegt somit das Konzept zugrunde, die Überwachungseinheit nicht im Abstand von dem Signalleitungsanschluss des Signalleitungssystems anzuordnen, sondern in unmittelbarer Nachbarschaft zu dem Signalleitungsanschluss, so dass ein Steckkontaktanschluss der Überwachungseinheit durch eine Steckverbindung unmittelbar mit dem Signalleitungsanschluss des Signalleitungssystems verbindbar ist, ohne dass eine zusätzliche Verbindungsleitung oder ein zusätzliches Verbindungskabel oder eine zusätzliche Steckverbindung zur Herstellung eines elektrisch leitenden Kontakts zwischen dem Steckkontaktanschluss der Überwachungseinheit und dem Signalleitungsanschluss des Signalleitungssystems erforderlich ist.

Hierdurch kann das Zellkontaktierungssystem einschließlich der Überwachungseinheit sehr kompakt und raumsparend ausgebildet sein.

Ferner werden durch den Wegfall der Kabelverbindung zwischen der Überwachungseinheit und dem Signalleitungsanschluss des Signalleitungssystems Bauteile eingespart, so dass das erfindungsgemäße Zellkontaktierungssystem auch besonders kostengünstig herstellbar ist.

Die Überwachungseinheit dient dazu, die von den Signalquellen des Zellkontaktierungssystems bereitgestellten Signale, insbesondere elektrische Potentiale und/oder Temperaturdaten, zu überwachen und auszuwerten, um zu jedem Zeitpunkt den Betriebszustand der elektrochemischen Vorrichtung erfassen und gegebenenfalls erforderlich werdende Maßnahmen, beispielsweise eine Abschaltung der elektrochemischen Vorrichtung, vornehmen zu können.

Hierzu ist es besonders günstig, wenn die Überwachungseinheit einen Prozessor zur elektronischen Verarbeitung der von den Signalquellen bereitgestellten Signale umfasst.

Eine solche Überwachungseinheit wird auch als "BMU" ("Battery Management Unit") oder als "CSC" ("Circuit Supervisory Controller") bezeichnet.

Die Überwachungseinheit kann beispielsweise innerhalb eines Gehäuses des Zellkontaktierungssystems angeordnet sein, das vorzugsweise aus einem Trägerelement, welches das Stromleitungssystem und das Signalleitungssystem des Zellkontaktierungssystems trägt, und einem an dem Trägerelement festgelegten Abdeckelement gebildet ist.

Dabei ist das Abdeckelement lösbar an dem Trägerelement festgelegt, um das Gehäuse in einfacher Weise öffnen und die Überwachungseinheit für Wartungs- und /oder Reparaturzwecke entnehmen zu können.

Bei dem erfindungsgemäßen Zellkontaktierungssystem ist vorgesehen, dass der Signalleitungsanschluss einen Signalstecker oder eine Signalbuchse umfasst und dass die Überwachungseinheit eine zu dem Signalstecker des Signalleitungsanschlusses komplementäre Signalbuchse bzw. einen zu der Signalbuchse des Signalleitungsanschlusses komplementären Signalstecker umfasst.

Der Steckkontaktanschluss der Überwachungseinheit und der Signalleitungsanschluss des Signalleitungssystems sind, vorzugsweise ohne ein dazwischengeschaltetes Anschlusskabel, zusammensteckbar.

Ferner ist vorgesehen, dass die Überwachungseinheit einen Signalanschluss zum Anschließen einer Verbindungsleitung zu einer Überwachungseinheit eines anderen Zellkontaktierungssystems oder zu einer zentralen Überwachungsvorrichtung umfasst.

Bei einer bevorzugten Ausgestaltung der Erfindung umfasst der Signalleitungsanschluss des Signalleitungssystems ein Anschlussgehäuse, wobei an dem Anschlussgehäuse mindestens ein Anschlusspin zum Anschließen einer Signalleitung des Signalleitungssystems festgelegt ist.

Dabei kann insbesondere vorgesehen sein, dass mindestens ein Anschlusspin gekrümmt ausgebildet ist.

Der Krümmungswinkel kann beispielsweise ungefähr 90° betragen. Hierdurch ist es möglich, den Anschlusspin einerseits mit einer Signalleitung des Signalleitungssystems zu verbinden, welche in einer durch eine Längsrichtung des Zellkontaktierungssystems und durch eine zu dieser Längsrichtung senkrecht verlaufenden Querrichtung des Zellkontaktierungssystems aufgespannten Ebene verläuft, und andererseits in einer senkrecht zu der Längsrichtung und senkrecht zu der Querrichtung ausgerichteten Kontaktrichtung in Kontakt mit dem Steckkontaktanschluss der Überwachungseinheit zu bringen.

Ferner kann vorgesehen sein, dass das Anschlussgehäuse des Signalleitungsanschlusses eine Aufnahme für ein Anschlussgehäuse des Steckkontaktanschlusses umfasst, wobei an dem Anschlussgehäuse des Steckkontaktanschlusses mindestens ein Anschlusspin festgelegt ist.

Umgekehrt könnte auch vorgesehen sein, dass das Anschlussgehäuse des Steckkontaktanschlusses, an welchem mindestens ein Anschlusspin festgelegt ist, eine Aufnahme für das Anschlussgehäuse des Signalleitungsanschlusses umfasst.

Das Zellkontaktierungssystem umfasst ein Trägerelement, welches das Stromleitungssystem und das Signalleitungssystem trägt, wobei der Signalleitungsanschluss an dem Trägerelement festgelegt ist.

Vorzugsweise ist der Signalleitungsanschluss lösbar an dem Trägerelement festgelegt, beispielsweise verrastet.

Der Signalleitungsanschluss ist vorzugsweise ein separat von dem Trägerelement hergestelltes Bauteil.

Das Zellkontaktierungssystem umfasst zusätzlich zu dem Trägerelement, welches das Stromleitungssystem und das Signalleitungssystem trägt, ein lösbar an dem Trägerelement festgelegtes Abdeckelement, wobei das Stromleitungssystem, das Signalleitungssystem und die Überwachungseinheit zumindest teilweise, vorzugsweise im Wesentlichen vollständig, zwischen dem Trägerelement und dem Abdeckelement angeordnet sind. Hierdurch ergibt sich eine besonders kompakte Bauform des Zellkontaktierungssystems.

Um die Überwachungseinheit in einer gewünschten Position relativ zu dem Trägerelement und/oder zu dem Abdeckelement positionieren zu können, ist es von Vorteil, wenn das Trägerelement und/oder das Abdeckelement mindestens ein Positionierelement umfasst, welches mit der Überwachungseinheit in Eingriff steht.

Bei der Erfindung ist vorgesehen, dass das Zellkontaktierungssystem ein Abdeckelement, welches im montierten Zustand des Zellkontaktierungssystems auf der den Zellterminals der elektrochemischen Vorrichtung abgewandten Seite des Stromleitungssystems und des Signalleitungssystems angeordnet ist, umfasst.

Die Überwachungseinheit kann insbesondere in einem Überwachungseinheit-Gehäuse angeordnet sein.

Ein solches Überwachungseinheit-Gehäuse kann als ein separat von dem Abdeckelement hergestelltes Element ausgebildet sein.

Das Überwachungseinheit-Gehäuse kann ein Gehäuseunterteil und ein Gehäuseoberteil umfassen.

In diesem Fall kann insbesondere vorgesehen sein, dass das Gehäuseunterteil des Überwachungseinheit-Gehäuses einstückig mit dem Abdeckelement ausgebildet ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine perspektivische Explosionsdarstellung eines Zellkontaktierungssystems für eine elektrochemische Vorrichtung, insbesondere ein Akkumulatormodul, welches ein Trägerelement, ein an dem Trägerelement gehaltenes Stromleitungssystem und ein an dem Trägerelement gehaltenes Signalleitungssystem, ein Abdeckelement und eine zwischen dem Abdeckelement und dem Trägerelement angeordnete Überwachungseinheit zur Überwachung von Signalen von Signalquellen des Zellkontaktierungssystems umfasst;
- Fig. 2: eine Draufsicht von oben auf das Trägerelement, das Stromleitungssystem und das Signalleitungssystem aus Fig. 1;
- Fig. 3: einen schematischen Schnitt durch das Zellkontaktierungssystem aus Fig. 2 längs der Linie 3-3 in Fig. 2;
- Fig. 4: einen schematischen Querschnitt durch das Zellkontaktierungssystem, längs der Linie 4-4 in Fig. 2, jedoch mit montierter Überwachungseinheit und mit auf das Trägerelement aufgesetztem Abdeckelement;
- Fig. 5: eine Draufsicht von oben auf das Zellkontaktierungssystem aus den Fig. 1 bis 4;
- Fig. 6: eine Seitenansicht des Zellkontaktierungssystems aus Fig. 5, mit der Blickrichtung in Richtung des Pfeiles 6 in Fig. 5;
- Fig. 7: eine perspektivische Darstellung einer elektrochemischen Vorrichtung, beispielsweise eines Akkumulatormoduls, mit einem Gehäuse und mehreren darin angeordneten elektrochemischen Zellen, wobei das Zellkontaktierungssystem auf das Gehäuse aufsetzbar und mit Zellterminals der elektrochemischen Zellen elektrisch leitend verbindbar ist;
- Fig. 8: eine perspektivische Darstellung einer zweiten Ausführungsform des Zellkontaktierungssystems, bei welcher die Überwachungseinheit außerhalb des Zwischenraums zwischen dem Trägerelement und dem Abdeckelement angeordnet ist, und zwar in einem Gehäuse, dessen Gehäuseunterteil einstückig mit dem Abdeckelement ausgebildet ist;
- Fig. 9: eine Draufsicht von oben auf das Zellkontaktierungssystem aus Fig. 8;
- Fig. 10: einen Querschnitt durch das Zellkontaktierungssystem aus Fig. 9, längs der Linie 10-10 in Fig. 9;
- Fig. 11: eine Seitenansicht des Zellkontaktierungssystems aus Fig. 9, mit der Blickrichtung in Richtung des Pfeiles 11 in Fig. 9;
- Fig. 12: eine perspektivische Darstellung eines Gehäuseoberteils des Gehäuses, in welchem die Überwachungseinheit bei der zweiten Ausführungsform des Zellkontaktierungssystems angeordnet ist;
- Fig. 13: eine schematische Darstellung des Zellkontaktierungssystems aus den Fig. 8 bis 12, ohne das in Fig. 12 dargestellte Gehäuseoberteil;
- Fig. 14: eine perspektivische Darstellung der Überwachungseinheit des Zellkontaktierungssystems;
- Fig. 15: eine perspektivische Darstellung des Trägerelements, des Stromleitungssystems und des Signalleitungssystems der zweiten Ausführungsform des Zellkontaktierungssystems aus den Fig. 8 bis 14, bevor ein Anschlussgehäuse eines Signalleitungsanschlusses des Zellkontaktierungssystems an dem Trägerelement festgelegt worden ist;
- Fig. 16: eine der Fig. 15 entsprechende perspektivische Darstellung des Trägerelements, des Stromleitungssystems und des Signalleitungssystems, nachdem das Anschlussgehäuse an dem Trägerelement festgelegt worden ist;
- Fig. 17: eine perspektivische Darstellung einer dritten Ausführungsform des Zellkontaktierungssystems, bei welcher die Überwachungseinheit in einem Gehäuse angeordnet ist, welches separat von dem Abdeckelement hergestellt und lösbar an dem Abdeckelement festgelegt ist;
- Fig. 18: eine Draufsicht von oben auf das Zellkontaktierungssystem aus Fig. 17;
- Fig. 19: eine Vorderansicht des Zellkontaktierungssystems aus Fig. 18, mit der Blickrichtung in Richtung des Pfeiles 19 in Fig. 18;
- Fig. 20: eine Seitenansicht des Zellkontaktierungssystems aus den Fig. 18 und 19, mit der Blickrichtung in Richtung des Pfeiles 20 in Fig. 18;
- Fig. 21: einen Längsschnitt durch das Zellkontaktierungssystem aus den Fig. 18 bis 20;
- Fig. 22: eine perspektivische Darstellung des Gehäuses, in dem die Überwachungseinheit bei der dritten Ausführungsform des Zellkontaktierungssystems angeordnet ist;
- Fig. 23: eine perspektivische Explosionsdarstellung des Gehäuses für die Überwachungseinheit aus Fig. 22, wobei ein Gehäuseoberteil des Gehäuses von einem Gehäuseunterteil des Gehäuses abgehoben ist;
- Fig. 24: eine perspektivische Darstellung des Zellkontaktierungssystems aus den Fig. 17 bis 23, wobei das Gehäuse der Überwachungseinheit von dem Abdeckelement abgenommen worden ist und ein Signalleitungsanschluss des Signalleitungssystems sich durch eine Durchtrittsöffnung in dem Abdeckelement hindurch erstreckt; und
- Fig. 25: eine schematische Darstellung des Zellkontaktierungssystems aus den Fig. 17 bis 24, wobei das Abdeckelement von dem Trägerelement abgenommen worden ist.

Gleiche oder funktional äquivalente Elemente sind in allen Figuren mit denselben Bezugszeichen bezeichnet.

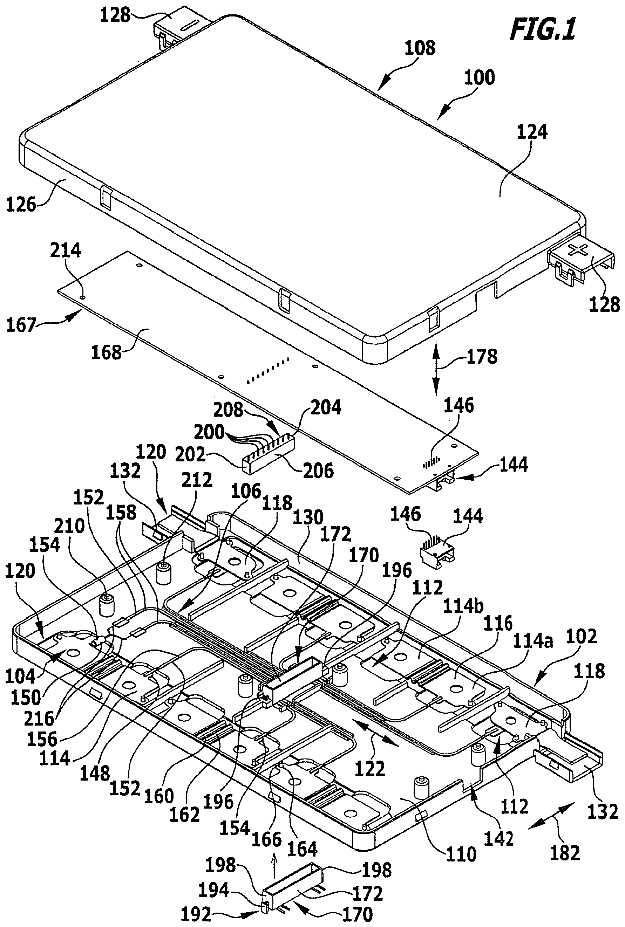

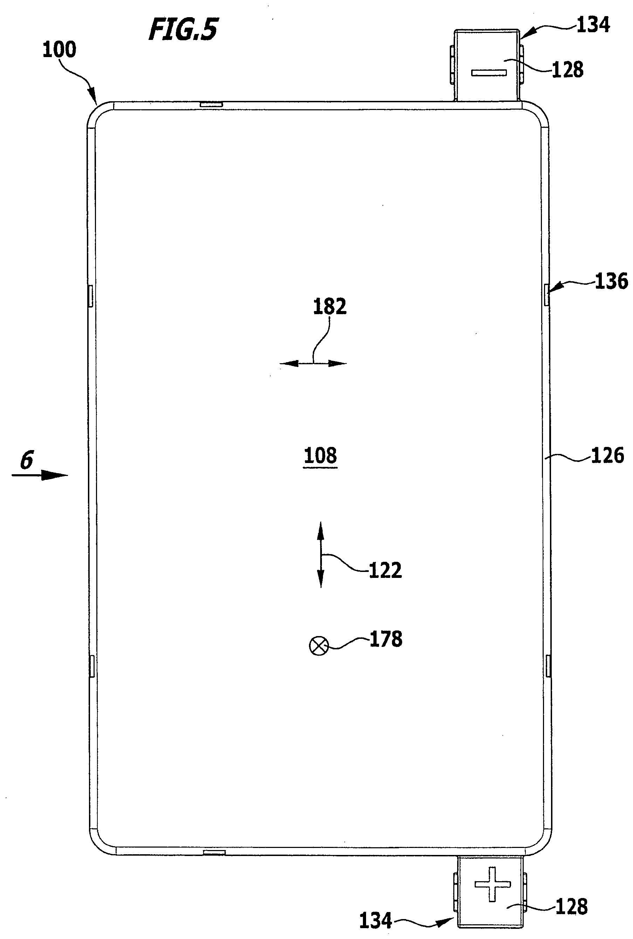

Ein in den Fig. 1 bis 6 dargestelltes, als Ganzes mit 100 bezeichnetes erfindungsgemäßes Zellkontaktierungssystem umfasst ein Trägerelement 102, an dem ein Stromleitungssystem 104 und ein Signalleitungssystem 106 gehalten sind, ein auf das Trägerelement 102 aufsetzbares Abdeckelement 108 und eine im Zwischenraum zwischen dem Trägerelement 102 und dem Abdeckelement 108 angeordnete Überwachungseinheit 167 zur Überwachung von Signalen, die über das Signalleitungssystem 106 an die Überwachungseinheit 167 übermittelt werden.

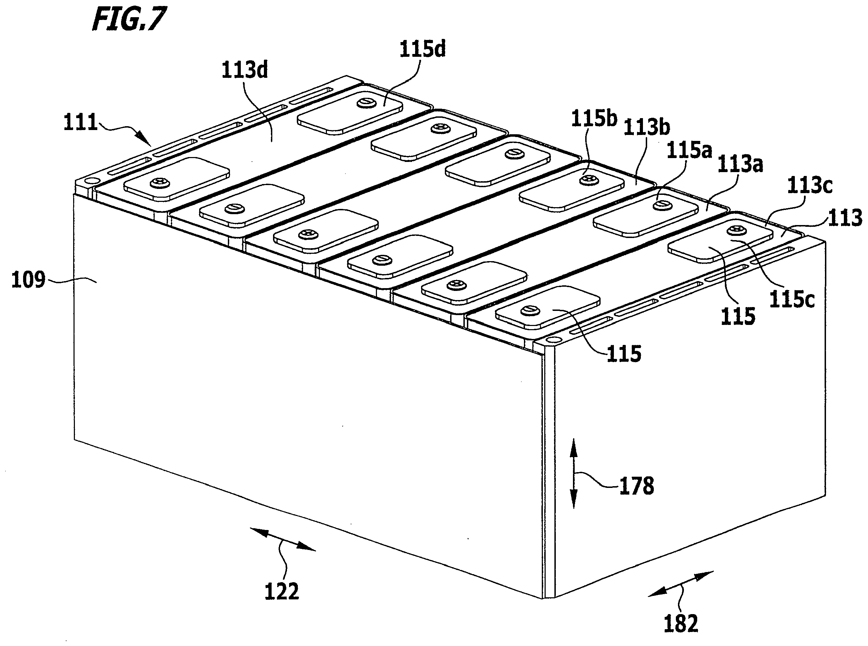

Das Trägerelement 102 ist auf ein (in Fig. 7 dargestelltes) Gehäuse 109 einer elektrochemischen Vorrichtung 111, beispielsweise eines Akkumulatormoduls, mit mehreren elektrochemischen Zellen 113, insbesondere Akkumulatorzellen, aufsetzbar und verschließt im montierten Zustand der elektrochemischen Vorrichtung 111 eine obere Gehäuseöffnung, durch welche Zellterminals 115 der elektrochemischen Zellen 113 der elektrochemischen Vorrichtung 111 hervorstehen.

Das Trägerelement 102 kann beispielsweise in Form einer vorzugsweise im Wesentlichen rechteckigen Trägerplatte 110 ausgebildet sein.

Das Trägerelement 102 ist mit einer Mehrzahl von Durchtrittsöffnungen 112 versehen, wobei jede Durchtrittsöffnung 112 einerseits jeweils einem Kontaktbereich 114 eines Zellverbinders 116 oder eines Stromanschlusses 118 und andererseits jeweils einem Zellterminal 115 der elektrochemischen Zellen 113 der elektrochemischen Vorrichtung 111 zugeordnet ist, so dass durch eine solche Durchtrittsöffnung 112 jeweils ein Zellterminal 115 mit einem zugeordneten Kontaktbereich 114 eines Zellverbinders 116 oder eines Stromanschlusses 118 verbindbar ist.

Dabei kann sich beispielsweise ein Zellterminal 115 durch die Durchtrittsöffnung 112 hindurch erstrecken, um in Kontakt mit einem Kontaktbereich 114 eines Zellverbinders 116 oder eines Stromanschlusses 118 zu kommen.

Alternativ hierzu kann sich auch ein Kontaktbereich 114 eines Zellverbinders 116 oder eines Stromanschlusses 118 durch die jeweils zugeordnete Durchtrittsöffnung 112 hindurch erstrecken, um in Kontakt mit dem jeweils zugeordneten Zellterminal 115 zu kommen.

Ferner ist auch denkbar, dass sich sowohl das Zellterminal 115 als auch der Kontaktbereich 114 des Zellverbinders 116 bzw. des Stromanschlusses 118 beide in die Durchtrittsöffnung 112 hinein erstrecken und dort miteinander verbunden sind.

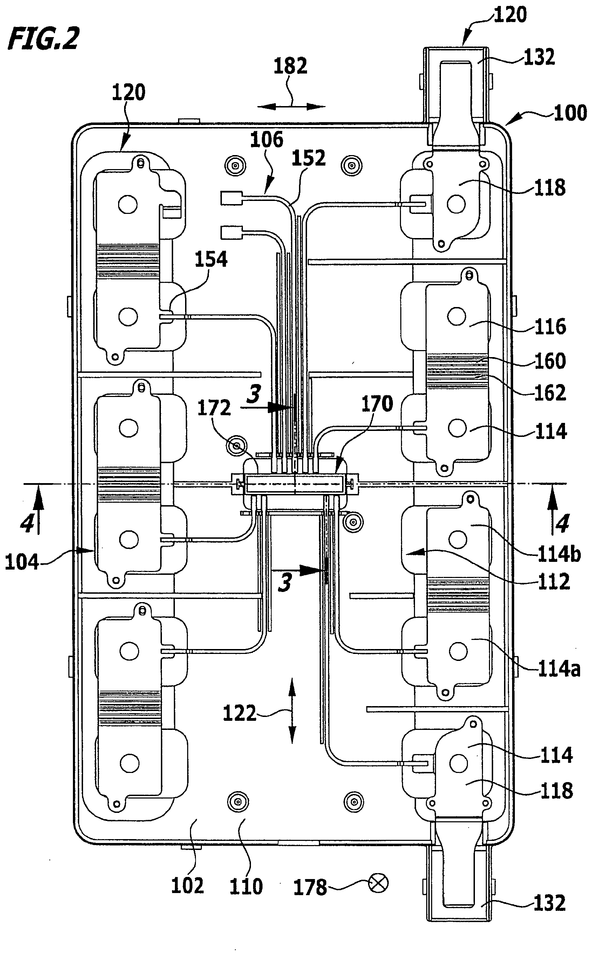

Wie aus den Fig. 1 und 2 zu ersehen ist, können die Durchtrittsöffnungen 112 des Trägerelements 102 in mehreren Reihen 120 angeordnet sein, wobei die Reihen 120 sich beispielsweise in einer Längsrichtung 122 des Trägerelements 102 erstrecken.

Die Durchtrittsöffnungen 112 können insbesondere im Wesentlichen rechteckig ausgebildet sein, insbesondere mit abgerundeten Eckbereichen; grundsätzlich sind aber auch andere Formen der Durchtrittsöffnungen 112, insbesondere kreisförmige, ovale, quadratische oder polygonale Durchtrittsöffnungen 112, möglich.

An der im montierten Zustand des Zellkontaktierungssystems 100 den elektrochemischen Zellen 113 abgewandten Oberseite des Trägerelements 102 ist das Abdeckelement 108 angeordnet, welches zum Abdecken des Stromleitungssystems 104 und des Signalleitungssystems 106 dient.

Das Abdeckelement 108 ist beispielsweise in Form einer im Wesentlichen rechteckigen Abdeckplatte 124 ausgebildet.

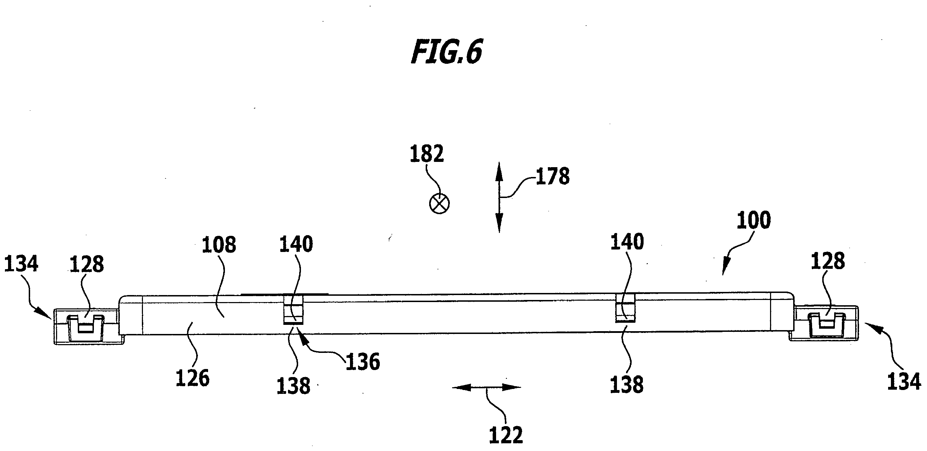

Wie am besten aus den Fig. 1 und 6 zu ersehen ist, ist das Abdeckelement 108 ferner vorzugsweise mit einem längs eines äußeren Randes umlaufenden, im montierten Zustand des Zellkontaktierungssystems 100 zu dem Trägerelement 102 hin vorstehenden Randbereich 126 versehen.

Der Randbereich 126 des Abdeckelements 108 kann von zwei Durchtrittskanälen 128 unterbrochen sein, welche vom Rand des Abdeckelements 108, beispielsweise in der Längsrichtung 122 nach vorne oder nach hinten, vorstehen und beispielsweise einen im Wesentlichen U-förmigen Querschnitt aufweisen können.

Wie am besten aus Fig. 1 zu ersehen ist, ist auch das Trägerelement 102 vorzugsweise mit einem längs eines äußeren Randes umlaufenden, im montierten Zustand des Zellkontaktierungssystems 100 zu dem Abdeckelement 108 hin vorstehenden Randbereich 130 versehen.

Auch der Randbereich 130 des Trägerelements 102 kann von zwei Durchtrittskanälen 132 unterbrochen sein, welche vom Rand des Trägerelements 102, vorzugsweise in der Längsrichtung 122 nach vorne oder nach hinten, vorstehen und beispielsweise einen im Wesentlichen U-förmigen Querschnitt aufweisen können.

Die Durchtrittskanäle 132 des Trägerelements 102 und die Durchtrittskanäle 128 des Abdeckelements 108 sind an einander entsprechenden Stellen der jeweiligen Randbereiche 130 bzw. 126 angeordnet und mit ihren offenen Seiten einander zugewandt, so dass die Durchtrittskanäle 132, 128 zusammen jeweils einen Durchtrittsschacht 134 bilden, welcher zur Aufnahme jeweils eines der Stromanschlüsse 118 des Zellkontaktierungssystems 100 dient.

Die Stromanschlüsse 118 und die Zellverbinder 116, mittels welcher die Zellterminals 115 jeweils zweier einander benachbarter elektrochemischer Zellen 113 mit unterschiedlicher Polarität elektrisch leitend miteinander verbindbar sind, bilden zusammen das Stromleitungssystem 104 des Zellkontaktierungssystems 100.

Das Stromleitungssystem 104 dient dazu, einen Stromfluss zwischen den elektrochemischen Zellen 113 der elektrochemischen Vorrichtung 111 und zu den oder von den Stromanschlüssen 118 des Zellkontaktierungssystems 100 zu ermöglichen.

Durch dieses Stromleitungssystem 104 werden beispielsweise die elektrochemischen Zellen 113 der elektrochemischen Vorrichtung 111 elektrisch in Reihe geschaltet.

Dabei verbindet jeder Zellverbinder 116 ein erstes Zellterminal 115a negativer Polarität einer ersten elektrochemischen Zelle 113a mit einem zweiten Zellterminal 115b positiver Polarität einer benachbarten zweiten elektrochemischen Zelle 113b (siehe Fig. 7).

Jeweils ein Zellterminal 115c der den Anfang der Zellen-Reihenschaltung der elektrochemischen Vorrichtung bildenden elektrochemischen Zelle 113c und ein Zellterminal 115d der das Ende der Zellen-Reihenschaltung bildenden elektrochemischen Zelle 113d sind elektrisch leitend mit einem der elektrisch leitenden Stromanschlüsse 118 des Zellkontaktierungssystems 100 verbunden.

Mehrere elektrochemische Vorrichtungen 111 mit jeweils einem Zellkontaktierungssystem 100 sind vorzugsweise elektrisch in Reihe geschaltet.

Eine solche Reihenschaltung kann insbesondere dadurch hergestellt werden, dass ein Stromanschluss 118 einer ersten elektrochemischen Vorrichtung 111 mittels eines (nicht dargestellten) Modulverbinders elektrisch leitend mit einem elektrischen Stromanschluss 118 (entgegengesetzter Polarität) einer zweiten elektrochemischen Vorrichtung 111 verbunden wird.

Um das Abdeckelement 108 lösbar an dem Trägerelement 102 festlegen zu können, ist vorzugsweise eine Rastvorrichtung 136 vorgesehen, welche ein oder mehrere an dem Abdeckelement 108 vorgesehene Rastelemente 138 und ein oder mehrere an dem Trägerelement 102 vorgesehene Rastelemente 140 umfasst.

Die abdeckelementseitigen Rastelemente 138 und die trägerelementseitigen Rastelemente 140 sind an einander entsprechenden Stellen des Randbereichs 126 des Abdeckelements 108 bzw. des Randbereichs 130 des Trägerelements 102 angeordnet und verrasten miteinander, wenn das Abdeckelement 108 auf das Trägerelement 102 aufgesetzt wird, so dass das Abdeckelement 108 mittels der Rastvorrichtung 136 lösbar an dem Trägerelement 102 gehalten ist.

Das Trägerelement 102 ist an seinem Randbereich 130 vorzugsweise mit einer oder mehreren Anschlussausnehmungen 142 versehen, durch welche jeweils ein Signalanschluss 144 (siehe insbesondere Fig. 1) mit mehreren Anschlusspins 146 von außerhalb des Zellkontaktierungssystems 100 für die Kontaktierung mit einem zum Signalanschluss 144 komplementären Signalleitungselement zugänglich ist.

Der Signalanschluss 144 kann beispielsweise als ein Signalleitungsstecker ausgebildet sein.

In diesem Fall ist das komplementär zu dem Signalanschluss 144 ausgebildete Signalleitungselement vorzugsweise als eine Signalbuchse ausgebildet.

Der Signalanschluss 144 dient zum Anschließen der an dem Trägerelement 102 angeordneten Überwachungseinheit 167 an eine (nicht dargestellte) zentrale Überwachungsvorrichtung oder an die Überwachungseinheit 167 eines anderen (nicht dargestellten) Zellkontaktierungssystems 100 über eine (nicht dargestellte), vorzugsweise mehrpolige, Verbindungsleitung.

In Fig. 1 ist der Signalanschluss 144 zu Illustrationszwecken zweimal dargestellt, einmal in einer an der Überwachungseinheit 167 montierten Position und einmal in einer von der Überwachungseinheit 167 gelösten Position.

Das Signalleitungssystem 106 dient zum Verbinden von einer oder mehreren Spannungsabgriffstellen 148 an jeweils einem Zellverbinder 116 oder Stromanschluss 118 und/oder von einem oder mehreren Temperatursensoren 150 des Zellkontaktierungssystems 100 mit der Überwachungseinheit 167.

Das Signalleitungssystem 106 umfasst eine oder mehrere Signalleitungen 152, welche jeweils eine Signalquelle 154 elektrisch leitend mit dem Signalleitungsanschluss 170 verbinden.

Wenn die Signalquelle 154 eine Spannungsabgriffstelle 148 an einem Zellverbinder 116 oder an einem Stromanschluss 118 ist, so ist diese Signalquelle 154 über eine Spannungsabgriffsleitung 156 mit dem Signalleitungsanschluss 170 verbunden.

Die Spannungsabgriffstellen 148 sind an jeweils einem Kontaktbereich 114 eines Zellverbinders 116 oder eines Stromanschlusses 118 des Zellkontaktierungssystems 100 angeschlossen, um das dort jeweils herrschende elektrische Potential abgreifen zu können.

Wenn die Signalquelle 154 ein Temperatursensor 150 ist, so ist die Signalquelle 154 mittels einer oder mehrerer Temperaturmessleitungen 158 elektrisch leitend mit dem Signalleitungsanschluss 170 verbunden.

Die Temperatursensoren 150 stehen vorzugsweise ebenfalls in Kontakt mit einem Kontaktbereich 114 eines Zellverbinders 116 oder eines Stromanschlusses 118 des Zellkontaktierungssystems 100, um die dort herrschende Temperatur messen zu können.

Jeder der Kontaktbereiche 114 der Zellverbinder 116 und jeder Stromanschluss 118 ist jeweils einem Zellterminal 115 der elektrochemischen Vorrichtung 111 zugeordnet und im montierten Zustand der elektrochemischen Vorrichtung 111 elektrisch leitend, vorzugsweise stoffschlüssig, mit dem jeweils zugeordneten Zellterminal 115 verbunden.

Jeder Zellverbinder 116 umfasst zwei Kontaktbereiche 114 zum elektrischen Kontaktieren von jeweils einem Zellterminal 115 und einen die beiden Kontaktbereiche 114 miteinander verbindenden Kompensationsbereich 160. Der Kompensationsbereich 160 ist vorzugsweise elastisch und/oder plastisch verformbar, um eine Relativbewegung der beiden Kontaktbereiche 114 des Zellverbinders 116 relativ zueinander im Betrieb der elektrochemischen Vorrichtung 111 und/oder zum Toleranzausgleich bei der Montage des Zellkontaktierungssystems 100 zu ermöglichen.

Zu diesem Zweck kann der Kompensationsbereich 160 insbesondere eine oder mehrere quer zu einer Verbindungsrichtung, welche ein Zentrum des ersten Kontaktbereichs 114a und ein Zentrum des zweiten Kontaktbereichs 114b des Zellverbinders 116 miteinander verbindet, verlaufende Kompensationswellen 162 aufweisen.

Jeder Kontaktbereich 114 eines Zellverbinders 116 oder eines Stromanschlusses 118 kann mittels jeweils eines Positionierungsloches 164 an einem jeweils zugeordneten Positionierungsstift 166 des Trägerelements 102 positioniert sein.

Dabei durchsetzt vorzugsweise der Positionierungsstift 166 des Trägerelements 102 das jeweils zugeordnete Positionierungsloch 164 des Zellverbinders 116 bzw. des Stromanschlusses 118.

Das Trägerelement 102 und/oder das Abdeckelement 108 umfasst vorzugsweise ein elektrisch nicht leitendes Kunststoffmaterial, beispielsweise PBT (Polybutylenterephthalat), PP (Polypropylen), PA (Polyamid), ABS (Acrylnitril-Butadien-Styrol) und/oder LCP ("Liquid Crystal Polymer"), und ist vorzugsweise im Wesentlichen vollständig aus einem solchen Kunststoffmaterial gebildet.

Ein besonders geeignetes Material für das Trägerelement 102 und/oder das Abdeckelement 108 ist ein mit Talkum verstärktes Polypropylen-Material (beispielsweise das Material mit der Bezeichnung PP TV20). Dieses Material weist durch die Talkumverstärkung eine besonders hohe Formstabilität auf.

Die Signalleitungen 152 des Signalleitungssystems 106 führen zu einem Signalleitungsanschluss 170 des Signalleitungssystems 106, welcher vorzugsweise im Wesentlichen mittig an dem Trägerelement 102 angeordnet ist.

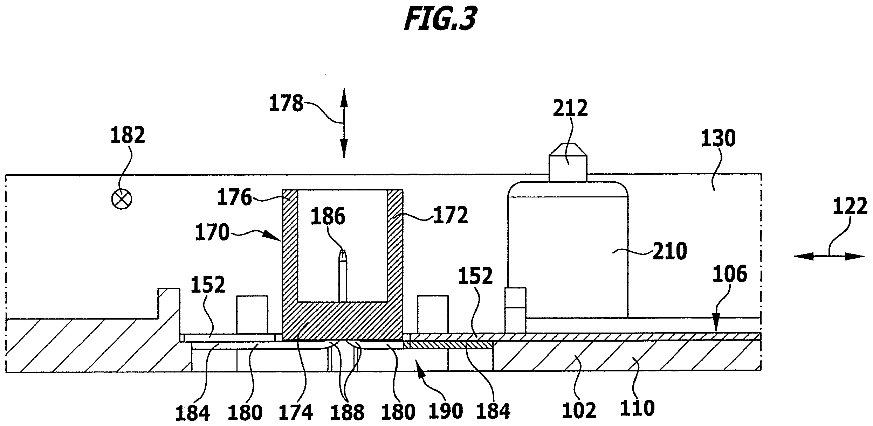

Wie am besten aus dem Querschnitt von Fig. 3 zu ersehen ist, umfasst der Signalleitungsanschluss 170 ein Anschlussgehäuse 172 mit einer Bodenwand 174 und von der Bodenwand 174 getragenen Seitenwänden 176, welche sich in einer Kontaktrichtung 178 von der Bodenwand 174 in Richtung auf die Überwachungseinheit 167 hin erstrecken.

Die Kontaktrichtung 178 verläuft vorzugsweise im Wesentlichen senkrecht zur Längsrichtung 122 des Trägerelements 102, im Wesentlichen senkrecht zu einer Querrichtung 182 des Trägerelements 102 (welche ihrerseits senkrecht zur Längsrichtung 122 des Trägerelements verläuft) und im Wesentlichen parallel zu der Richtung, in welcher sich die Zellterminals 115 der elektrochemischen Zellen 113 der elektrochemischen Vorrichtung 111 zu den Zellverbindern 116 und den Stromanschlüssen 118 des Stromleitungssystems 104 hin erstrecken.

Das Anschlussgehäuse 172 des Signalleitungsanschlusses 170 ist vorzugsweise aus einem elektrisch isolierenden Material, insbesondere aus einem Kunststoffmaterial, gebildet.

Beispielsweise kann das Anschlussgehäuse 172 aus PBT (Polybutylenterephthalat), PP (Polypropylen), PA (Polyamid), ABS (Acrylnitril-Butadien-Styrol) und/oder LCP ("Liquid Crystal Polymer") gebildet sein.

Das Anschlussgehäuse 172 kann beispielsweise als ein Spritzgießteil hergestellt sein.

Ferner umfasst der Signalleitungsanschluss 170 für jede Signalleitung 152 jeweils einen Anschlusspin 180, welcher sich durch das Anschlussgehäuse 172, insbesondere dessen Bodenwand 174, hindurch erstreckt und an dem Anschlussgehäuse 172 gehalten ist.

Insbesondere kann vorgesehen sein, dass die Anschlusspins 180 abschnittsweise in das Anschlussgehäuse 172 eingegossen sind.

Jeder der Anschlusspins 180 ist vorzugsweise im Wesentlichen winkelförmig ausgebildet und umfasst einen Anschlussabschnitt 184, welcher im Wesentlichen parallel zu einem Endbereich der jeweils zugeordneten Signalleitung 152 ausgerichtet ist, und einen Kontaktabschnitt 186, welcher im Wesentlichen parallel zu der Kontaktrichtung 178 und somit im Wesentlichen senkrecht zu dem Anschlussabschnitt 184 ausgerichtet ist.

Der Anschlussabschnitt 184 und der Kontaktabschnitt 186 jedes Anschlusspins 180 sind durch einen gekrümmten Abschnitt 188 miteinander verbunden.

Der gesamte Krümmungswinkel des gekrümmten Abschnitts 188 beträgt vorzugsweise im Wesentlichen 90°.

Die Anschlussabschnitte 184 des Signalleitungsanschlusses 170 sind vorzugsweise stoffschlüssig mit den Endbereichen der jeweils zugeordneten Signalleitungen 152 verbunden, beispielsweise durch Verschweißung, insbesondere durch Ultraschallschweißung, und/oder durch Verlötung.

Der Signalleitungsanschluss 170 ist vorzugsweise an einer Durchtrittsöffnung 190 des Trägerelements 102 angeordnet, welche groß genug ist, um das Anschlussgehäuse 172 und die daran angeordneten Anschlusspins 180 passieren zu lassen, so dass der Signalleitungsanschluss 170 von der der Überwachungseinheit 167 abgewandten Seite des Trägerelements 102 her durch die Durchtrittsöffnung 190 in den Zwischenraum zwischen dem Trägerelement 102 und der Überwachungseinheit 167 eingebracht werden kann, bis die Anschlussabschnitte 184 der Anschlusspins 180 des Signalleitungsanschlusses 170 an den Endbereichen der jeweils zugeordneten Signalleitungen 152 anliegen, wie dies in Fig. 3 dargestellt ist.

Der Überlappungsbereich der Anschlussabschnitte 184 und der Signalleitungen 152 ist dabei durch die Durchtrittsöffnung 190 hindurch zugänglich, so dass durch die Durchtrittsöffnung 190 hindurch die stoffschlüssige Verbindung zwischen den Anschlusspins 180 und den Endbereichen der Signalleitungen 152 hergestellt werden kann.

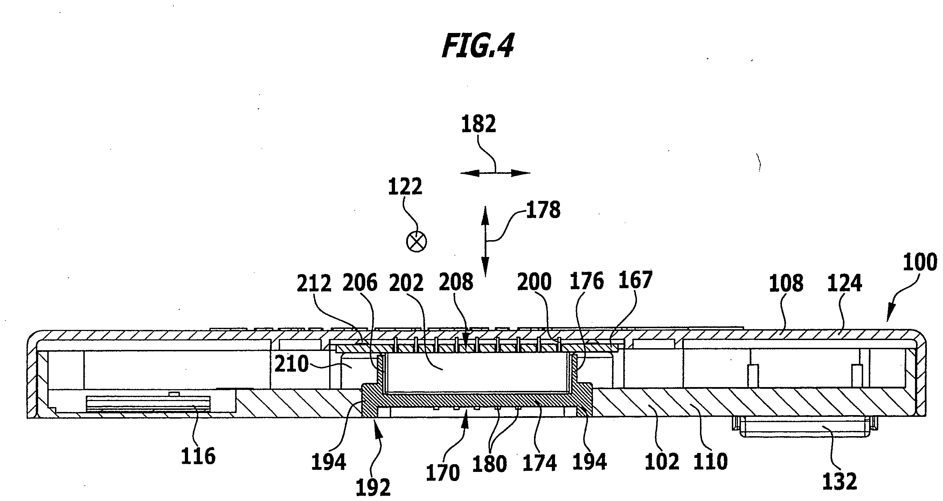

Die Einführbewegung des Anschlussgehäuses 172 durch die Durchtrittsöffnung 190 längs der Kontaktrichtung 178 wird dabei vorzugsweise mittels einer Führungseinrichtung 192 geführt, welche anschlussgehäuseseitige Führungselemente 194 und komplementär hierzu ausgebildete trägerelementseitige Führungselemente 196 umfasst (siehe die Fig. 1 und 4).

Die anschlussgehäuseseitigen Führungselemente 194 können insbesondere einen ungefähr T-förmigen Querschnitt aufweisen und beispielsweise an einander gegenüberliegenden Stirnflächen 198 des Anschlussgehäuses 172 angeordnet sein.

Nach dem stoffschlüssigen Verbinden der Anschlusspins 180 mit den Endbereichen der Signalleitungen 152 wird das Anschlussgehäuse 172 durch diese stoffschlüssigen Verbindungen in seiner montierten Position an dem Trägerelement 102 gehalten.

Alternativ oder ergänzend hierzu kann aber auch vorgesehen sein, dass das Anschlussgehäuse 172 des Signalleitungsanschlusses 170 durch Formschluss, insbesondere durch Verrastung, an dem Trägerelement 102 gehalten ist.

Die Überwachungseinheit 167 umfasst eine Leiterplatte 168 mit (an der dem Trägerelement 102 zugewandten Seite angeordneten und daher in den Figuren nicht dargestellten) Leiterbahnen, welche mit jeweils einem Anschlusspin 200 der Überwachungseinheit 167 elektrisch leitend verbunden sind, beispielsweise durch Verlötung.

Diese Leiterbahnen führen zu den Eingängen eines Prozessors (der ebenfalls an der dem Trägerelement 102 zugewandten Seite der Leiterplatte 168 angeordnet und daher in den Figuren nicht dargestellt ist).

Wie am besten aus den Fig. 1 und 4 zu ersehen ist, ist jeder der Anschlusspins 200 in einem Anschlussgehäuse 202 der Überwachungseinheit 167 gehalten, und zwar derart, dass sich die Anschlusspins 200 der Überwachungseinheit 167 im montierten Zustand des Zellkontaktierungssystems 100 im Wesentlichen parallel zu der Kontaktrichtung 178 erstrecken.

Das Anschlussgehäuse 202 weist eine Deckenwand 204 auf, durch welche sich die Anschlusspins 200 hindurch erstrecken, und sich von der Deckenwand 204 in der Kontaktrichtung 178 auf das Trägerelement 102 zu erstreckende Seitenwände 206.

Das Anschlussgehäuse 202 ist vorzugsweise aus einem elektrisch isolierenden Material, insbesondere aus einem Kunststoffmaterial, gebildet.

Insbesondere kann vorgesehen sein, dass das Anschlussgehäuse 202 aus PBT (Polybutylenterephthalat), PP (Polypropylen), PA (Polyamid), ABS (Acrylnitril-Butadien-Styrol) und/oder LCP ("Liquid Crystal Polymer") gebildet ist.

Das Anschlussgehäuse 202 ist vorzugsweise als ein Spritzgießteil hergestellt.

Die Anschlusspins 200 der Überwachungseinheit 167 und/oder die Anschlusspins 180 des Signalleitungsanschlusses 170 sind aus einem elektrisch leitfähigen Material, beispielsweise aus Kupfer oder aus Aluminium, aus einer Kupferlegierung oder aus einer Aluminiumlegierung, gebildet.

Das Anschlussgehäuse 202 der Überwachungseinheit 167 ist derart komplementär zu dem Anschlussgehäuse 172 des Signalleitungsanschlusses 170 des Signalleitungssystems 106 ausgebildet, dass die beiden Anschlussgehäuse 172 und 202 durch eine Steckverbindung unmittelbar miteinander verbindbar sind. Vorzugsweise ist dabei im eingesteckten Zustand das Anschlussgehäuse 202 der Überwachungseinheit 167 zumindest teilweise, vorzugsweise im Wesentlichen vollständig, in dem Anschlussgehäuse 172 des Signalleitungsanschlusses 170 aufgenommen.

Umgekehrt kann auch vorgesehen sein, dass im eingesteckten Zustand das Anschlussgehäuse 172 des Signalleitungsanschlusses 170 zumindest teilweise, vorzugsweise im Wesentlichen vollständig, in dem Anschlussgehäuse 202 der Überwachungseinheit 167 aufgenommen ist.

Das Anschlussgehäuse 202 und die Anschlusspins 200 bilden zusammen einen Steckkontaktanschluss 208 der Überwachungseinheit 167.

Wenn die Steckverbindung zwischen dem Steckkontaktanschluss 208 der Überwachungseinheit 167 einerseits und dem Signalleitungsanschluss 170 des Signalleitungssystems 106 andererseits hergestellt ist, ist der Prozessor der Überwachungseinheit 167 elektrisch leitend mit den Signalquellen 154 des Zellkontaktierungssystems 100 verbunden.

Die Steckverbindung zwischen dem Steckkontaktanschluss 208 und dem Signalleitungsanschluss 170 ist jederzeit lösbar, indem die Überwachungseinheit 167 in der Kontaktrichtung 178 von dem Trägerelement 102 abgehoben wird.

Alternativ oder ergänzend zu einem Einbetten der Anschlusspins 180 und/oder 200 in das Anschlussgehäuse 172 bzw. das Anschlussgehäuse 202 kann auch vorgesehen sein, dass die Anschlusspins 180 bzw. 200 in anderer Weise stoffschlüssig mit dem jeweiligem Anschlussgehäuse 172 bzw. 202 verbunden sind, beispielsweise durch Verklebung.

Alternativ oder ergänzend hierzu kann auch vorgesehen sein, dass die Anschlusspins 180 bzw. 200 durch Kraftschluss, insbesondere durch Presspassung, und/oder durch Formschluss, insbesondere durch Verrastung, mit dem jeweils zugeordneten Anschlussgehäuse 172 bzw. 202 verbunden sind.

Die Überwachungseinheit 167 wird vorzugsweise von Positionierelementen 210 getragen, welche an der der Überwachungseinheit 167 zugewandten Seite des Trägerelements 102 angeordnet sind.

Die Positionierelemente 210 können insbesondere einstückig mit dem Trägerelement 102 ausgebildet sein.

Jedes Positionierelement 210 ist mit einem Positionierzapfen 212 versehen, welcher sich im montierten Zustand des Zellkontaktierungssystems 100 durch eine jeweils zugeordnete Positionieröffnung 214 der Überwachungseinheit 167 hindurch erstreckt.

Auf diese Weise ist es möglich, die Überwachungseinheit 167 in gewünschter Weise längs der Längsrichtung 122 und längs der Querrichtung 182 relativ zu dem Trägerelement 102 zu positionieren.

Das vorstehend beschriebene Zellkontaktierungssystem 100 wird vorzugsweise als eine separate Baugruppe der elektrochemischen Vorrichtung 111 komplett vormontiert.

Bei dieser Vormontage werden die Bestandteile des Stromleitungssystems 104, insbesondere die Zellverbinder 116 und die Stromanschlüsse 118, sowie ein oder mehrere Temperatursensoren 150 und die Signalleitungen 152 des Signalleitungssystems 106 an dem Trägerelement 102 positioniert.

Das Anschlussgehäuse 172 des Signalleitungsanschlusses 170 des Signalleitungssystems 106 wird durch die Durchtrittsöffnung 190 im Trägerelement 102 längs der Kontaktrichtung 178 in seine Montageposition relativ zu dem Trägerelement 102 gebracht, und die Anschlusspins 180 des Signalleitungsanschlusses 170 werden elektrisch leitend mit den Endbereichen der Signalleitungen 152 verbunden.

Zur Illustration des Montagevorgangs ist der Signalleitungsanschluss 170 in Fig. 1 zweimal dargestellt, einmal vor der Montage und einmal in der am Trägerelement 102 montierten Position.

Das Anschlussgehäuse 202 der Überwachungseinheit 167 wird an der Leiterplatte 168 der Überwachungseinheit 167 montiert, wobei die Anschlusspins 200 des Steckkontaktanschlusses 208 elektrisch leitend mit den Leiterbahnen der Überwachungseinheit 167 verbunden werden.

Anschließend wird eine Steckverbindung zwischen dem Steckkontaktanschluss 208 der Überwachungseinheit 167 und dem Signalleitungsanschluss 170 des Signalleitungssystems 106 hergestellt.

Dabei werden zugleich die Positionierelemente 210 des Trägerelements 102 in Eingriff mit den Positionieröffnungen der Überwachungseinheit 167 gebracht, so dass die Überwachungseinheit 167 die gewünschte Position relativ zu dem Trägerelement 102 einnimmt.

Die dem Signalleitungsanschluss 170 des Signalleitungssystems 106 abgewandten Enden der Signalleitungen 152 werden elektrisch leitend mit den jeweils zugeordneten Signalquellen 154, also insbesondere mit den Spannungsabgriffstellen 148 der Zellverbinder oder der Stromanschlüsse 118 oder mit jeweils einem Anschlusselement 216 eines Temperatursensors 150 verbunden.

Somit sind alle für die Kontaktierung der elektrochemischen Zellen 113 der elektrochemischen Vorrichtung 111 benötigten Bauteile in einer als Einheit handhabbaren Baugruppe, nämlich in dem Zellkontaktierungssystem 100, bereits in der erforderlichen relativen Positionierung zusammengefasst.

Das Trägerelement 102 mit dem Stromleitungssystem 104 und dem Signalleitungssystem 106 sowie der Überwachungseinheit 167 wird bei der Montage der elektrochemischen Vorrichtung 111 auf das Gehäuse 109 aufgesetzt, in welchem die elektrochemischen Zellen 113 angeordnet sind, und mit dem die Gehäuseöffnung umgebenden Rand des Gehäuses 109 verbunden.

Anschließend werden die Zellverbinder 116 und die Stromanschlüsse 118 elektrisch leitend mit den jeweils zugeordneten Zellterminals 115 der elektrochemischen Vorrichtung 111 kontaktiert, beispielsweise durch Stoffschluss, insbesondere durch Verschweißung, und/oder durch Formschluss.

Nach erfolgter Kontaktierung zwischen dem Stromleitungssystem 104 und den Zellterminals 115 der elektrochemischen Zellen 113 der elektrochemischen Vorrichtung 111 wird das Abdeckelement 108 auf das Trägerelement 102 aufgesetzt und mit demselben verbunden, insbesondere durch Verrastung, so dass das Abdeckelement 108 das Stromleitungssystem 104, das Signalleitungssystem 106 und die Überwachungseinheit 167 des Zellkontaktierungssystems 100 abdeckt und vor einer ungewollten Berührung schützt.

Hierdurch wird eine Beschädigung des Stromleitungssystems 104, des Signalleitungssystems 106 und der Überwachungseinheit 167 während des Transports und der Montage der elektrochemischen Vorrichtung 111 verhindert.

Die fertig montierte elektrochemische Vorrichtung 111 kann mit mehreren anderen elektrochemischen Vorrichtungen 111, insbesondere Akkumulatormodulen, zu einer elektrochemischen Vorrichtungsgruppe zusammengesetzt werden, wobei insbesondere verschiedene elektrochemische Vorrichtungen 111 mittels (nicht dargestellter) Modulverbinder, welche die Stromanschlüsse 118 verschiedener elektrochemischer Vorrichtungen 111 miteinander verbinden, zusammengeschaltet werden können.

Auch die Signalanschlüsse 144 der Überwachungseinheiten 167 der verschiedenen elektrochemischen Vorrichtungen 111 können mit einem hierzu komplementären Signalleitungselement über jeweils eine, vorzugsweise mehrpolige, Verbindungsleitung untereinander verbunden oder an eine zentrale Überwachungsvorrichtung der elektrochemischen Vorrichtungsgruppe angeschlossen werden.

Während des Betriebs der elektrochemischen Vorrichtung 111 bzw. der elektrochemischen Vorrichtungsgruppe ermöglicht es die Überwachungseinheit 167 jedes Zellkontaktierungssystems 100, die von den Signalquellen 154 des jeweiligen Zellkontaktierungssystems 100 bereitgestellten Signale, insbesondere elektrische Potentiale und/oder Temperaturdaten, zu überwachen und auszuwerten, um zu jedem Zeitpunkt den Betriebszustand der elektrochemischen Vorrichtung 111 erfassen und gegebenenfalls erforderlich werdende Maßnahmen, beispielsweise eine Abschaltung der elektrochemischen Vorrichtung 111, vornehmen zu können.

Für Wartungs- und/oder Reparaturzwecke kann die Überwachungseinheit 167 leicht aus dem jeweiligen Zellkontaktierungssystem 100 entnommen werden, indem das Abdeckelement 108 von dem Trägerelement 102 abgenommen und anschließend die Steckverbindung zwischen dem Steckkontaktanschluss 208 der Überwachungseinheit 167 einerseits und dem Signalleitungsanschluss 170 des Signalleitungssystems 106 andererseits gelöst wird.

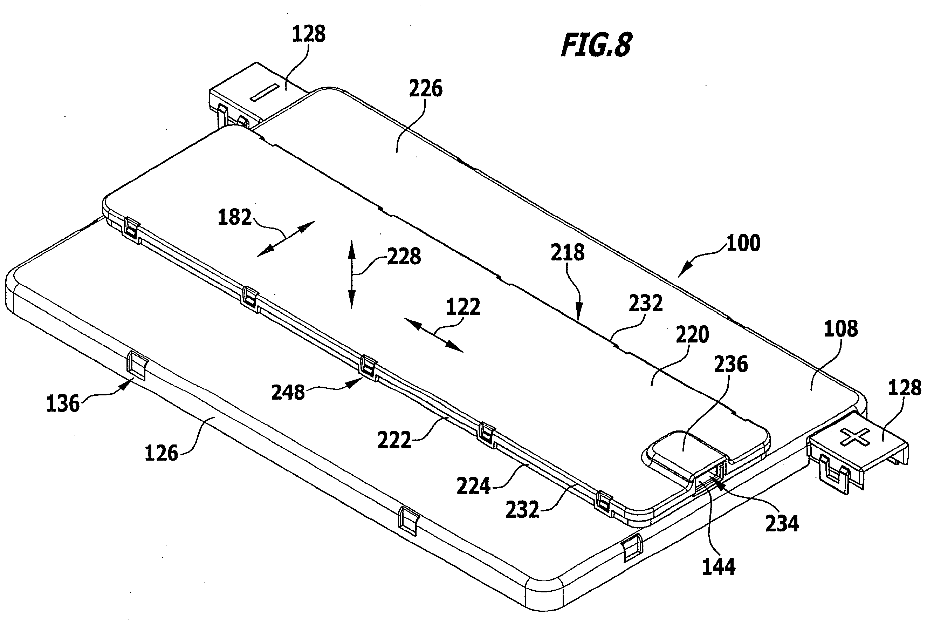

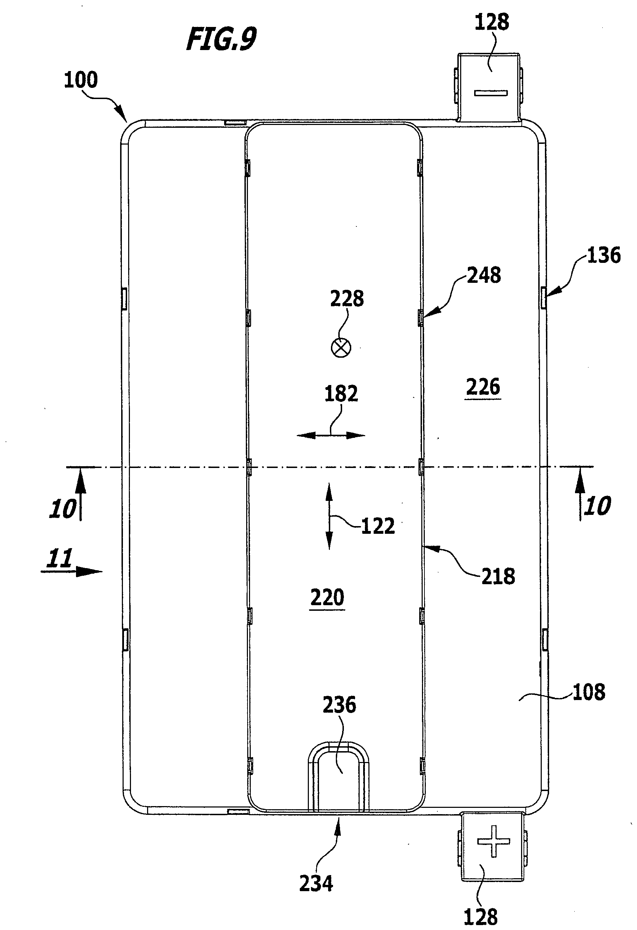

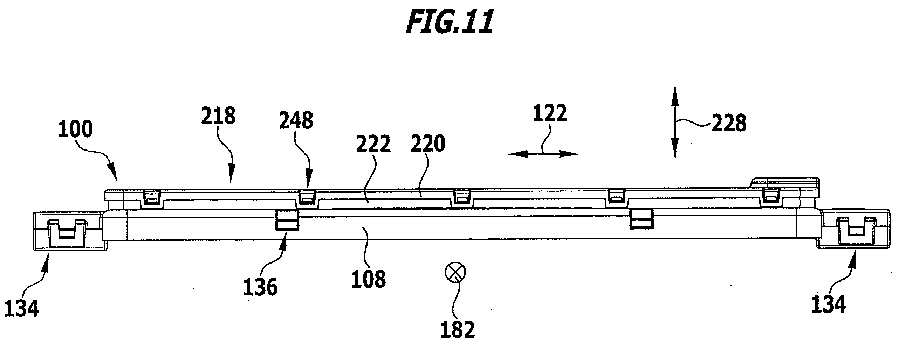

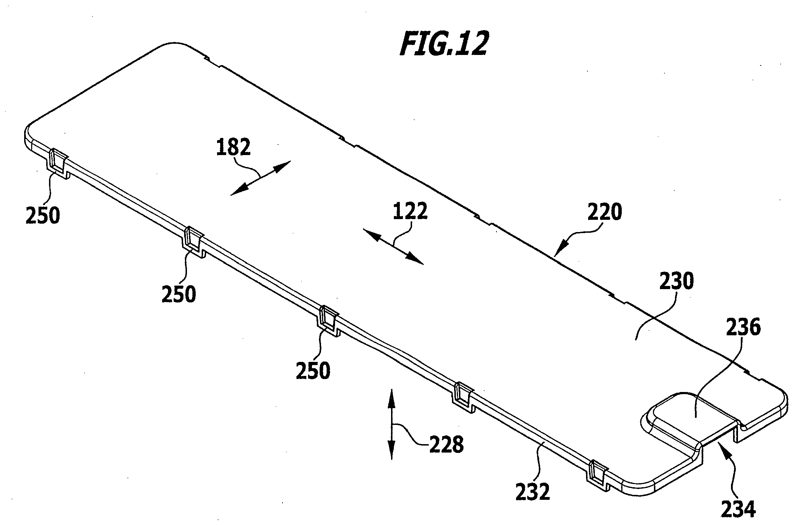

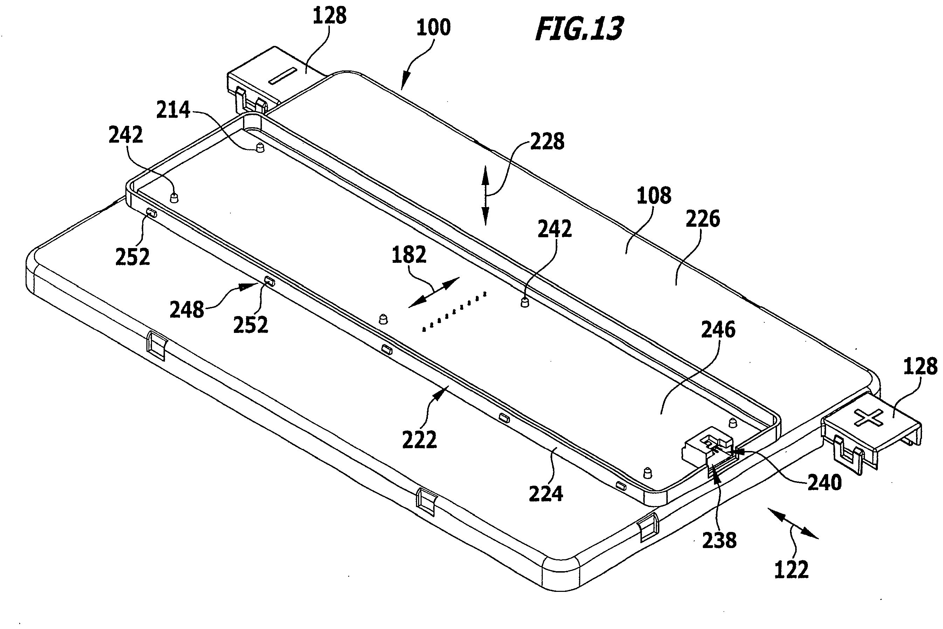

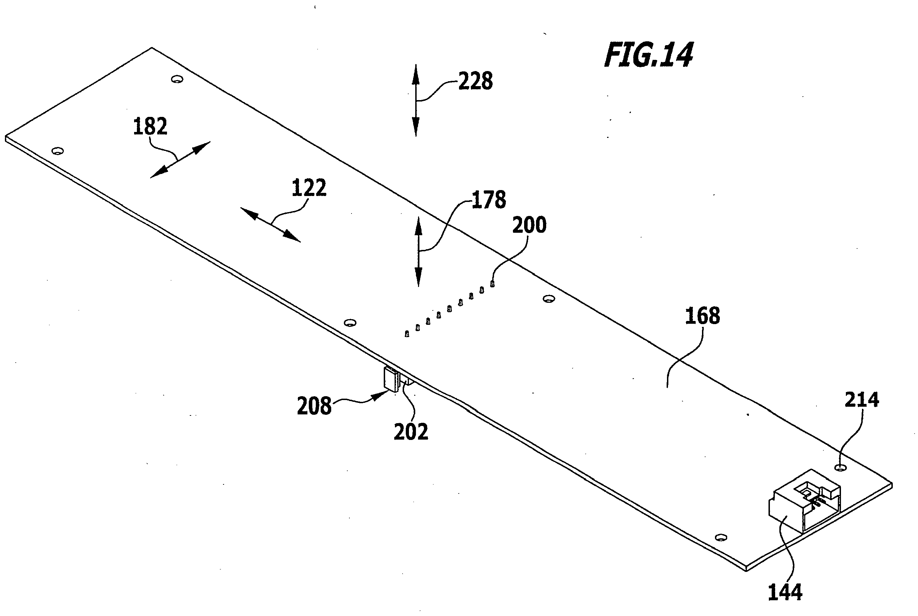

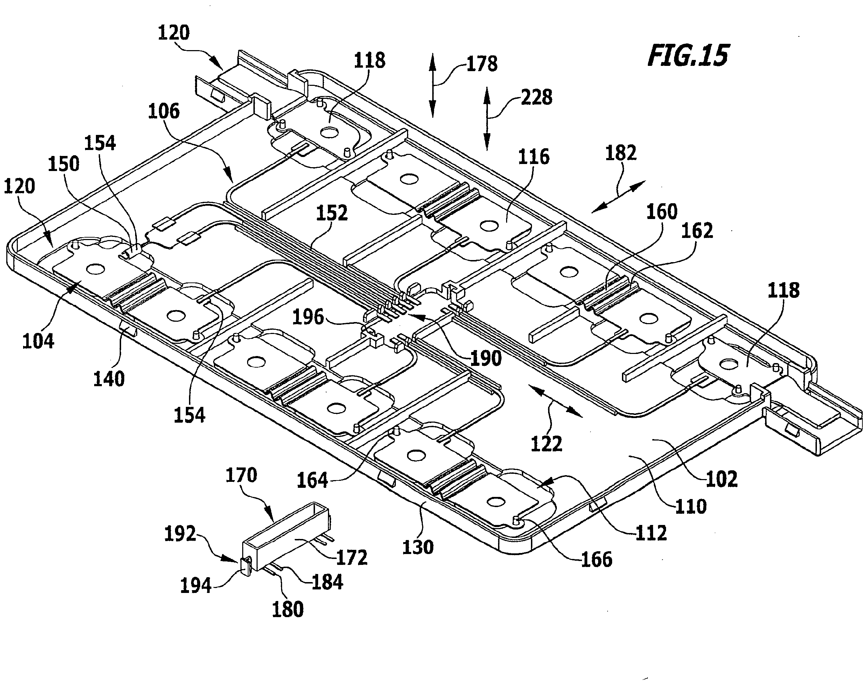

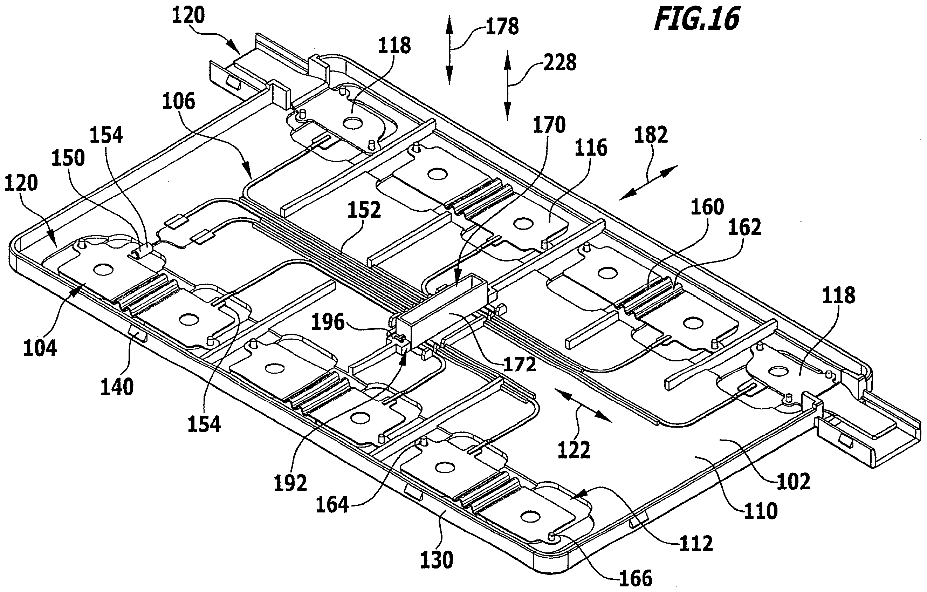

Eine in den Fig. 8 bis 16 dargestellte nicht erfindungsgemäße zweite Ausführungsform des Zellkontaktierungssystems 100 unterscheidet sich von der in den Fig. 1 bis 7 dargestellten ersten Ausführungsform dadurch, dass die Überwachungseinheit 167 bei der zweiten Ausführungsform nicht im Zwischenraum zwischen dem Trägerelement 102 und dem Abdeckelement 108 angeordnet ist, sondern in einem Überwachungseinheit-Gehäuse 218 mit einem Gehäuseoberteil 220 (siehe insbesondere Fig. 12) und einem Gehäuseunterteil 222 (siehe insbesondere Fig. 13), wobei das Gehäuseunterteil 222 einstückig mit dem Abdeckelement 108 ausgebildet ist.

Das Gehäuseunterteil 222 umfasst insbesondere einen Randbereich 224, welcher sich von einer dem Trägerelement 102 abgewandten Oberseite 226 aus in einer zur Längsrichtung 122 und zur Querrichtung 182 senkrechten Höhenrichtung 228 erstreckt.

Das in Fig. 12 einzeln dargestellte Gehäuseoberteil 220 umfasst beispielsweise eine vorzugsweise im Wesentlichen rechteckige Deckelplatte 230, von deren Rand sich ein Randbereich 232 in der Höhenrichtung 228 nach unten, zu dem Gehäuseunterteil 222 hin, erstreckt.

Das Gehäuseoberteil 220 weist ferner eine Durchtrittsöffnung 234 mit einer an die Durchtrittsöffnung 234 angrenzenden Erhebung 236 auf.

An einer der Position der Durchtrittsöffnung 234 des Gehäuseoberteils 220 entsprechenden Stelle ist der Randbereich 224 des Gehäuseunterteils 222 ebenfalls mit einer Durchtrittsöffnung 238 versehen, welche im montierten Zustand des Zellkontaktierungssystems 100 zusammen mit der Durchtrittsöffnung 234 des Gehäuseoberteils 220 einen Durchtrittsschacht 240 bildet, durch welchen der Signalanschluss 144 der Überwachungseinheit 167 von außerhalb des Überwachungseinheit-Gehäuses 218 zugänglich ist, um insbesondere eine Verbindungsleitung an den Signalanschluss 144 anzuschließen.

Innerhalb des vom Randbereich 224 des Gehäuseunterteils 222 umgebenen Abschnitts der Oberseite 226 des Abdeckelements 108 sind ferner mehrere Positionierelemente 242 vorgesehen, welche sich im montierten Zustand des Zellkontaktierungssystems 100 durch jeweils zugeordnete Positionieröffnungen 214 der Überwachungseinheit 167 hindurch erstrecken, um die Überwachungseinheit 167 in einer gewünschten Stellung bezüglich der Längsrichtung 122 und der Querrichtung 182 in dem Überwachungseinheit-Gehäuse 218 zu positionieren.

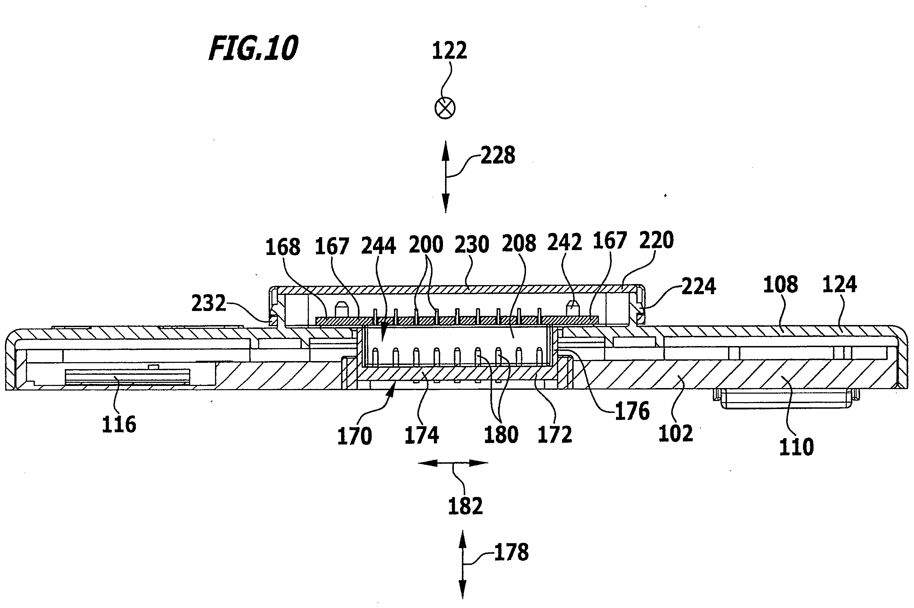

Wie am besten aus der Schnittdarstellung von Fig. 10 zu ersehen ist, weist bei dieser Ausführungsform das Abdeckelement 108 eine, vorzugsweise im Wesentlichen mittig angeordnete, Durchtrittsöffnung 244 auf, durch welche sich der Steckkontaktanschluss 208 der Überwachungseinheit 167 hindurch erstreckt, um zusammen mit dem Signalleitungsanschluss 170 des Signalleitungssystems 106 eine Steckverbindung auszubilden.

Dabei kann die Überwachungseinheit 167 mit ihrer dem Abdeckelement 108 zugewandten Unterseite an der Oberseite 226 des Abdeckelements 108 aufliegen oder aber in der Höhenrichtung 228 von der Oberseite 226 des Abdeckelements 108 beabstandet sein.

Im Gegensatz zu der ersten Ausführungsform ist bei dieser zweiten Ausführungsform des Zellkontaktierungssystems 100 der Signalanschluss 144 der Überwachungseinheit 167 nicht an der dem Trägerelement 102 zugewandten Unterseite der Überwachungseinheit 167, sondern an der dem Trägerelement 102 und dem Abdeckelement 108 abgewandten Oberseite 246 der Überwachungseinheit 167 angeordnet.

Insbesondere kann vorgesehen sein, dass der Signalanschluss 144 der Überwachungseinheit 167 im Bereich der Erhebung 236 des Gehäuseoberteils 220 in dem Überwachungseinheit-Gehäuse 218 aufgenommen ist.

Um das Gehäuseoberteil 220 lösbar an dem Gehäuseunterteil 222 festlegen zu können, ist vorzugsweise eine Rastvorrichtung 248 vorgesehen, welche ein oder mehrere an dem Gehäuseoberteil 220 vorgesehene Rastelemente 250 und ein oder mehrere an dem Gehäuseunterteil 222 vorgesehene Rastelemente 252 umfasst.

Die gehäuseoberteilseitigen Rastelemente 250 und die gehäuseunterteilseitigen Rastelemente 252 sind an einander entsprechenden Stellen des Randbereichs 232 des Gehäuseoberteils 220 bzw. des Randbereichs 224 des Gehäuseunterteils 222 angeordnet und verrasten miteinander, wenn das Gehäuseoberteil 220 auf das Gehäuseunterteil 222 aufgesetzt wird, so dass das Gehäuseoberteil 220 mittels der Rastvorrichtung 248 lösbar an dem Gehäuseunterteil 222 gehalten ist.

Das Gehäuseoberteil 220 des Überwachungseinheit-Gehäuses 218 umfasst vorzugsweise ein elektrisch nicht leitendes Material, insbesondere ein Kunststoffmaterial, beispielsweise PBT (Polybutylenterephthalat), PP (Polypropylen), PA (Polyamid), ABS (Acrylnitril-Butadien-Styrol) und/oder LCP ("Liquid Crystal Polymer"), und ist vorzugsweise im Wesentlichen vollständig aus einem solchen Kunststoffmaterial gebildet.

Bei der Montage der zweiten Ausführungsform des Zellkontaktierungssystems 100 wird beispielsweise so vorgegangen, dass das Abdeckelement 108 mit dem Gehäuseunterteil 222 zunächst ohne das Gehäuseoberteil 220 und ohne die Überwachungseinheit 167 auf das Trägerelement 102 aufgesetzt und mit diesem, vorzugsweise lösbar, verbunden wird.

Anschließend wird die Überwachungseinheit 167 längs der Höhenrichtung 228 von oben in das Überwachungseinheit-Gehäuse 218 eingesetzt. Dabei wird gleichzeitig die Steckverbindung zwischen dem Steckkontaktanschluss 208 der Überwachungseinheit 167 und dem Signalleitungsanschluss 170 des Signalleitungssystems 106 durch die Durchtrittsöffnung 244 in dem Abdeckelement 108 hindurch hergestellt.

Abschließend wird das Gehäuseoberteil 220 auf das Gehäuseunterteil 222 aufgesetzt und mit demselben verbunden, insbesondere durch Verrastung, so dass das Gehäuseoberteil 220 die Überwachungseinheit 167 abdeckt und vor einer ungewollten Berührung schützt.

Um die Überwachungseinheit 167 für Wartungs- und/oder Reparaturzwecke aus dem Zellkontaktierungssystem 100 zu entnehmen, muss lediglich das Gehäuseoberteil 220 des Überwachungseinheit-Gehäuses 218 von dem Gehäuseunterteil 222 gelöst und die Überwachungseinheit 167 von dem Signalleitungsanschluss 170 des Signalleitungssystems 106 abgezogen werden.

Es ist bei dieser Ausführungsform daher nicht erforderlich, für eine Entnahme der Überwachungseinheit 167 das Abdeckelement 108 von dem Trägerelement 102 zu lösen. Dies bietet den Vorteil, dass auch während der Entnahme der Überwachungseinheit 167 das Stromleitungssystem 104 und das Signalleitungssystem 106 des Zellkontaktierungssystems 100 durch das Abdeckelement 108 vor einer ungewollten Berührung geschützt bleiben.

Im Übrigen stimmt die in den Fig. 8 bis 16 dargestellte zweite Ausführungsform des Zellkontaktierungssystems 100 hinsichtlich Aufbau, Funktion und Herstellungsweise mit der in den Fig. 1 bis 7 dargestellten ersten Ausführungsform überein, auf deren vorstehende Beschreibung insoweit Bezug genommen wird.

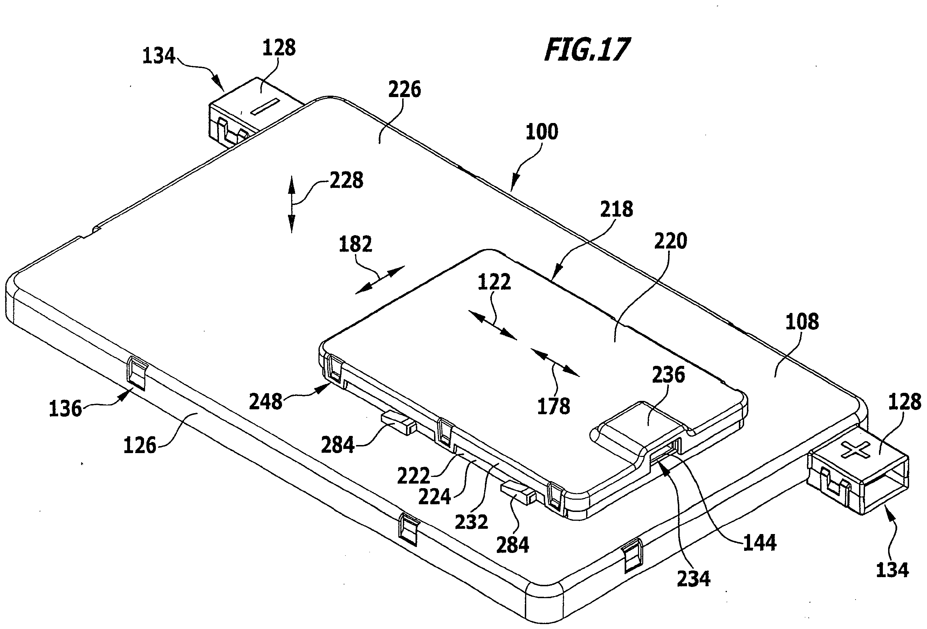

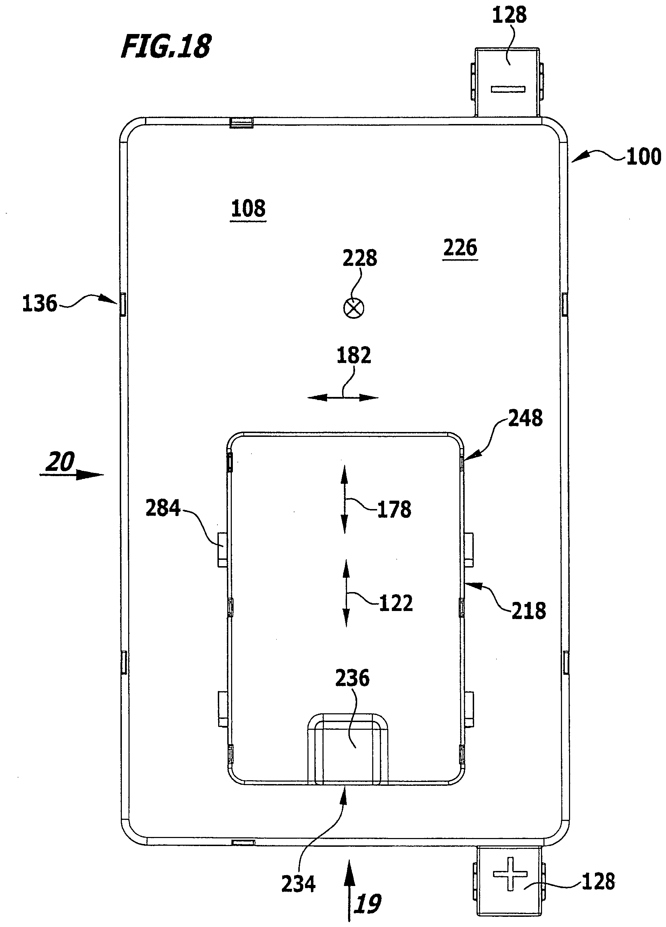

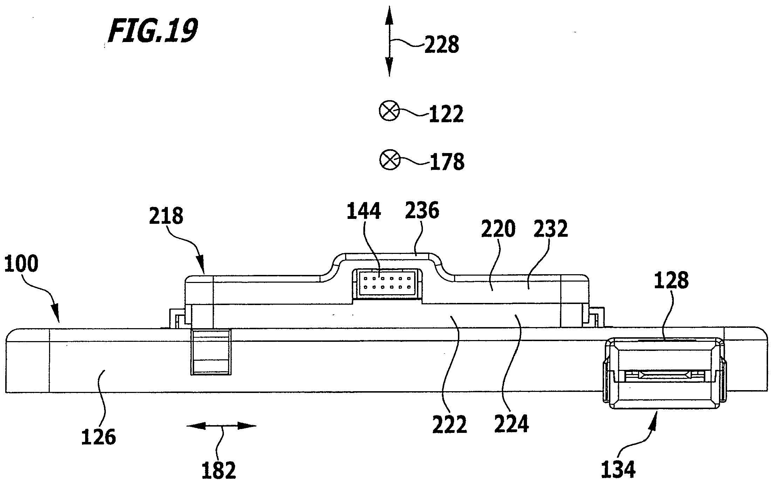

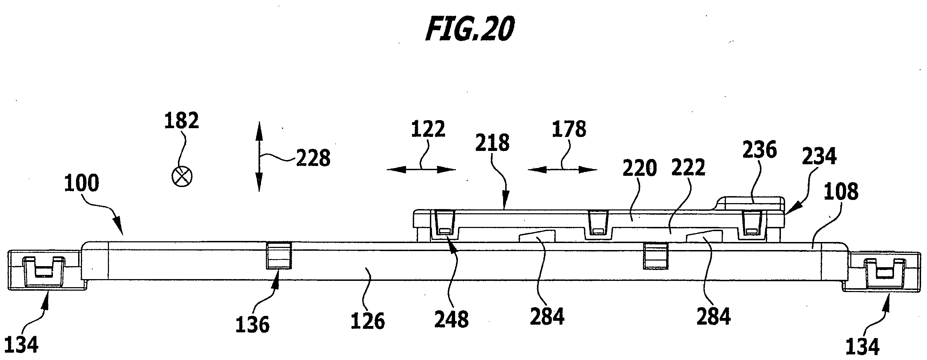

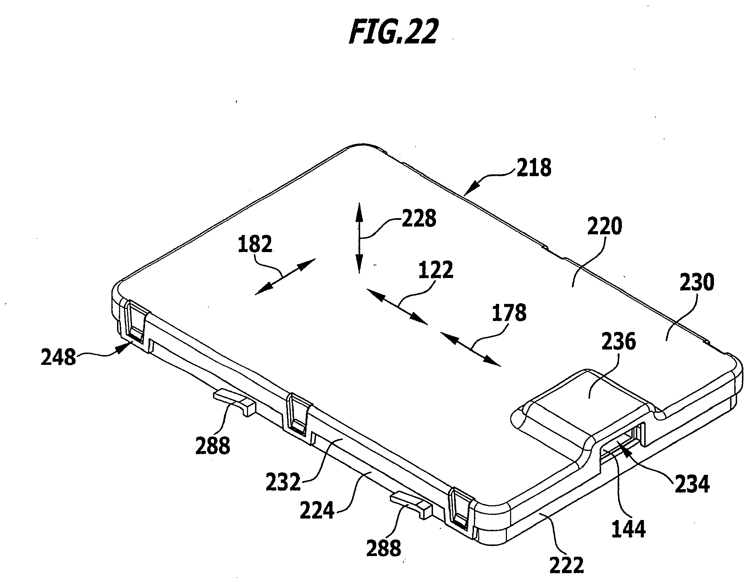

Eine in den Fig. 17 bis 25 dargestellte nicht erfindungsgemäße dritte Ausführungsform des Zellkontaktierungssystems 100 unterscheidet sich von der vorstehend beschriebenen zweiten Ausführungsform dadurch, dass das Gehäuseunterteil 222 des Überwachungseinheit-Gehäuses 218 nicht einstückig mit dem Abdeckelement 102 ausgebildet ist, sondern als ein von dem Abdeckelement 102 separat hergestelltes Bauelement.

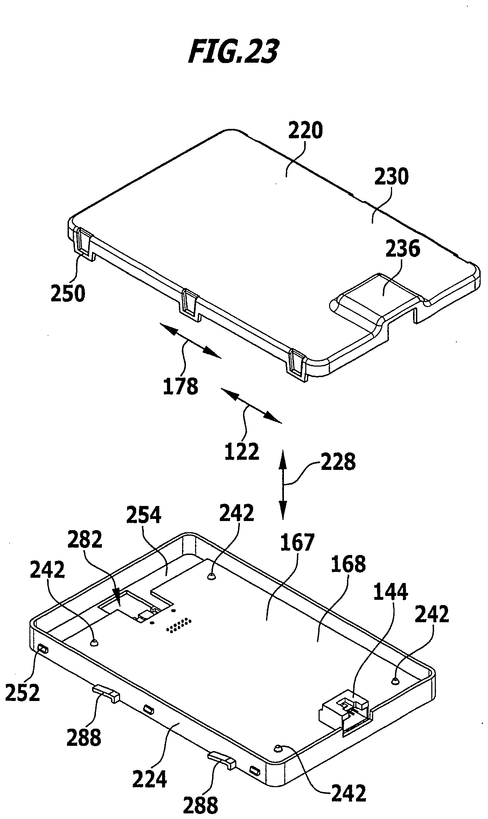

Das Gehäuseunterteil 222 umfasst somit bei dieser Ausführungsform zusätzlich zu dem Randbereich 224 eine im montierten Zustand des Zellkontaktierungssystems 100 dem Abdeckelement 108 zugewandte, vorzugsweise im Wesentlichen rechteckige, Bodenplatte 254 (siehe insbesondere Fig. 23).

Das Gehäuseunterteil 222 ist bei der dritten Ausführungsform vorzugsweise aus einem elektrisch isolierenden Material, insbesondere aus einem Kunststoffmaterial, beispielsweise aus PBT (Polybutylenterephthalat), PP (Polypropylen), PA (Polyamid), ABS (Acrylnitril-Butadien-Styrol) und/oder LCP ("Liquid Crystal Polymer"), gebildet.

Der an einer Unterseite 256 der Überwachungseinheit 167, welche der Bodenplatte 254 zugewandt ist, angeordnete Steckkontaktanschluss 208 der Überwachungseinheit 167 weist bei dieser Ausführungsform winkelförmig ausgebildete Anschlusspins 258 auf, welche jeweils einen sich in der Höhenrichtung 228 erstreckenden Anschlussabschnitt 260 und einen sich in der Längsrichtung 122 des Zellkontaktierungssystems 100 erstreckenden Kontaktabschnitt 262 umfassen.

Bei dieser Ausführungsform erstrecken sich somit die Kontaktabschnitte 262 der Anschlusspins 258 des Steckkontaktanschlusses 208 der Überwachungseinheit 167 längs einer Kontaktrichtung 178, die parallel zu der Ebene verläuft, welche von der Längsrichtung 122 und der Querrichtung 182 des Trägerelements 102 aufgespannt wird.

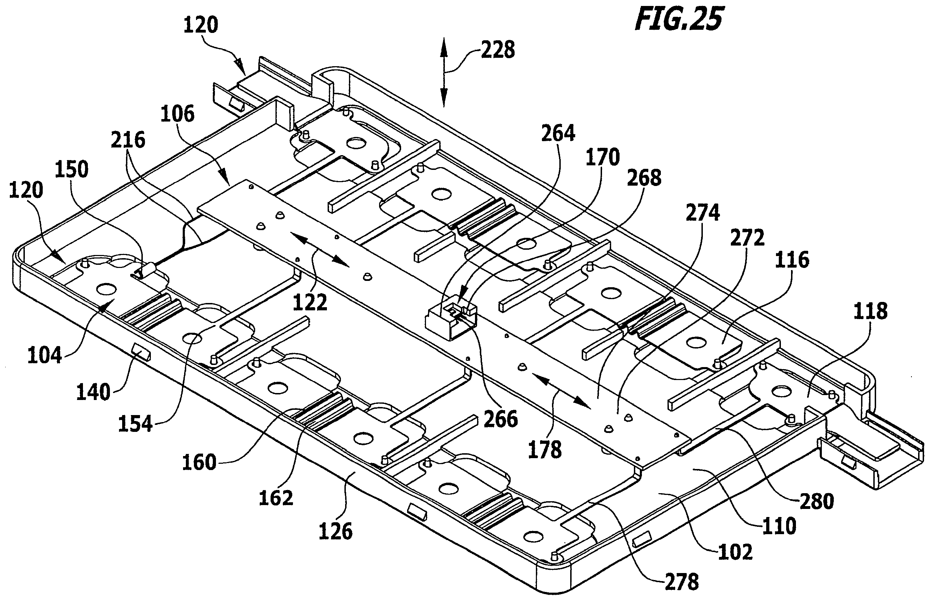

Wie am besten aus Fig. 25 zu ersehen ist, ist der Signalleitungsanschluss 170 des Signalleitungssystems 106 bei dieser Ausführungsform als ein komplementär zu dem Steckkontaktanschluss 208 der Überwachungseinheit 167 ausgebildeter Steckkontakt 264 ausgebildet, dessen Anschlusspins 266 ebenfalls sich parallel zur Längsrichtung 122 erstreckende Kontaktabschnitte 268 aufweisen.

Die Anschlussabschnitte 270 der Anschlusspins 266 dieses Steckkontakts 264 erstrecken sich durch jeweils zugeordnete Durchgangsöffnungen in einer Leiterplatte 272 hindurch, an deren Oberseite 274 der Steckkontakt 264 angeordnet ist.

An der der Oberseite 274 abgewandten Unterseite 276 der Leiterplatte 272, welche im montierten Zustand des Zellkontaktierungssystems dem Trägerelement 102 zugewandt ist, sind (nicht dargestellte) Leiterbahnen vorgesehen, welche jeweils einen Bestandteil einer Signalleitung 152 des Signalleitungssystems 106 bilden und mit jeweils einem Anschlusspin 266 des Steckkontakts 264 des Signalleitungssystems 106 elektrisch leitend verbunden sind, beispielsweise durch Verlötung.

An ihremdem jeweils zugeordneten Anschlusspin 266 abgewandten Ende ist jede Leiterbahn der Leiterplatte 272 elektrisch leitend, beispielsweise durch Verlötung, mit einem Spannungsabgriffelement 278, beispielsweise einem Spannungsabgriffsteg 280, eines Zellverbinders 116 oder eines Stromanschlusses 118 oder mit einem Anschlusselement 216, beispielsweise einem Anschlussdraht, eines Temperatursensors 150 verbunden.

Dabei führen die Spannungsabgriffelemente 278 jeweils von einer Leiterbahn der Leiterplatte 272 zu einer Spannungsabgriffstelle 148 an einem Zellverbinder 116 oder an einem Stromanschluss 118.

Bei der in den Figuren dargestellten Ausführungsform sind die Spannungsabgriffelemente 278 beispielsweise einstückig mit dem jeweils zugeordneten Zellverbinder 116 bzw. Stromanschluss 118 ausgebildet.

Jedes Spannungsabgriffelement 278 bildet zusammen mit der jeweils zugeordneten Leiterbahn der Leiterplatte 272, welche eine elektrisch leitende Verbindung zwischen dem Spannungsabgriffelement 278 und einem Anschlusspin 266 des Steckkontakts 264 herstellt, jeweils eine Spannungsabgriffsleitung 156 des Signalleitungssystems 106.

Ferner bildet jedes Anschlusselement 216 eines Temperatursensors 150 zusammen mit der jeweils zugeordneten Leiterbahn der Leiterplatte 272, welche eine elektrisch leitende Verbindung zwischen dem jeweiligen Anschlusselement 216 und einem Anschlusspin 266 des Steckkontakts 264 herstellt, jeweils eine Temperaturmessleitung 158 des Signalleitungssystems 106.

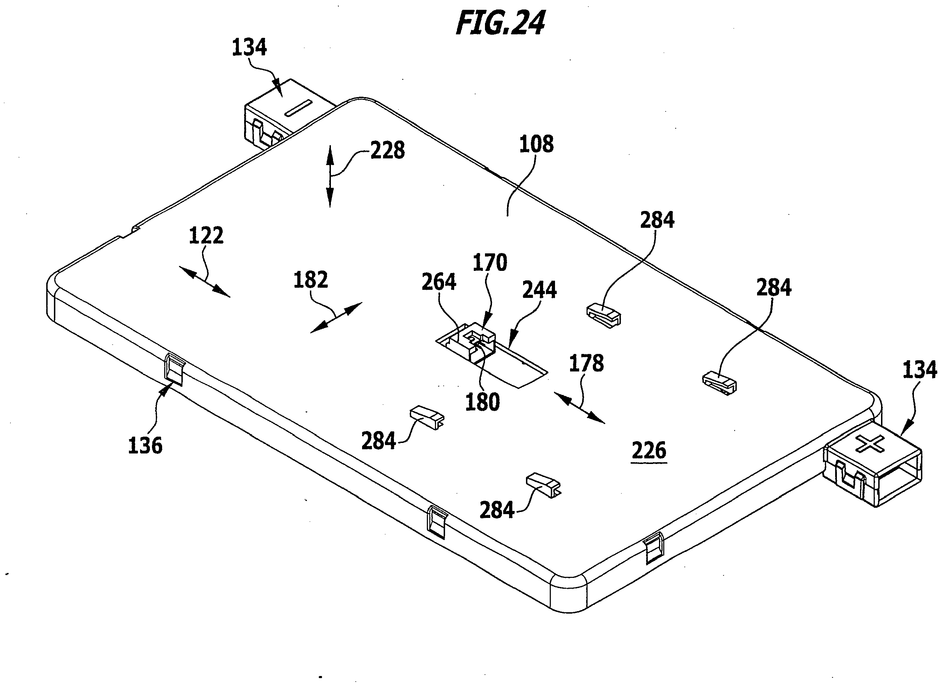

Wie am besten aus Fig. 24 zu ersehen ist, erstreckt sich der als Steckkontakt 264 ausgebildete Signalleitungsanschluss 170 des Signalleitungssystems 106 durch eine Durchtrittsöffnung 244 in dem Abdeckelement 108 hindurch.

Die Durchtrittsöffnung 244 erstreckt sich vor der Zugangsöffnung des Signalleitungsanschlusses 170 so weit in der Kontaktrichtung 178, dass der Steckkontaktanschluss 208 der Überwachungseinheit 167 vor dem Signalleitungsanschluss 170 in die Durchtrittsöffnung 244 eingesetzt und dann durch Verschiebung längs der Kontaktrichtung 178 in Steckkontakt mit dem Signalleitungsanschluss 170 gebracht werden kann.

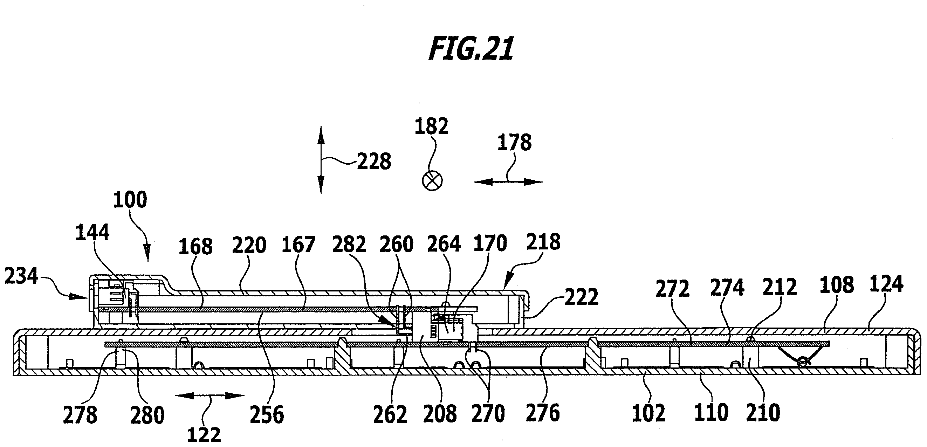

Der Steckkontaktanschluss 208 der Überwachungseinheit 167 erstreckt sich dabei durch eine Durchtrittsöffnung 282 im Gehäuseunterteil 222 des Überwachungseinheit-Gehäuses 218 hindurch (siehe insbesondere Fig. 21).

Um die Verschiebung des Überwachungseinheit-Gehäuses 218 relativ zu dem Abdeckelement 108 längs der Kontaktrichtung 178 zu führen, sind an der Oberseite 226 des Abdeckelements 108 mehrere, beispielsweise vier, abdeckelementseitige Führungselemente 284 vorgesehen, welche mit jeweils einem an dem Randbereich 224 des Gehäuseunterteils 222 des Überwachungseinheit-Gehäuses 218 angeordneten gehäuseseitigen Führungselement 288 zusammenwirken, um eine geführte Verschiebung des Überwachungseinheit-Gehäuses 218 relativ zu dem Abdeckelement 108 längs der Kontaktrichtung 178 zu ermöglichen.

Dabei kann vorgesehen sein, dass die abdeckelementseitigen Führungselemente 284 und die gehäuseseitigen Führungselemente 288 in der Arbeitsstellung des Überwachungseinheit-Gehäuses 218, in welcher der Steckkontaktanschluss 208 der Überwachungseinheit 167 in Steckverbindung mit dem Signalleitungsanschluss 170 des Signalleitungssystems 106 steht, lösbar aneinander festgelegt, insbesondere verrastet, sind.

Bei der Montage der dritten Ausführungsform des Zellkontaktierungssystems 100 wird die Überwachungseinheit 167 auf das Gehäuseunterteil 222 aufgelegt und dabei mittels der Positionierelemente 242 des Überwachungseinheit-Gehäuses 218 in der gewünschten Weise in der Längsrichtung und der Querrichtung des Überwachungseinheit-Gehäuses 218 positioniert, wobei der Steckkontaktanschluss 208 der Überwachungseinheit 167 sich durch die Durchtrittsöffnung 282 im Gehäuseunterteil 222 hindurch erstreckt (siehe Fig. 23).

Anschließend wird das Gehäuseoberteil 220 auf das Gehäuseunterteil 222 aufgesetzt und mit demselben verbunden, insbesondere durch Verrastung mittels der Rastvorrichtung 248, so dass das Gehäuseoberteil 220 die Überwachungseinheit 167 abdeckt und vor einer ungewollten Berührung schützt.

Hierdurch wird eine Beschädigung der Überwachungseinheit 167 auch dann zuverlässig vermieden, wenn das Überwachungseinheit-Gehäuse 218 von dem Abdeckelement 108 des Zellkontaktierungssystems 100 gelöst ist.

Anschließend wird das Überwachungseinheit-Gehäuse 218 so auf die Oberseite 226 des Abdeckelements 108 aufgesetzt, dass der Steckkontaktanschluss 208 der Überwachungseinheit 167 sich in die Durchtrittsöffnung 244 des Abdeckelements 108 hinein erstreckt und der Steckkontaktanschluss 208 sowie die gehäuseseitigen Führungselemente 288 so längs der Kontaktrichtung 178 von dem Signalleitungsanschluss 170 des Signalleitungssystems 106 bzw. von den abdeckelementseitigen Führungselementen 284 beabstandet sind, dass durch eine Verschiebung des Überwachungseinheit-Gehäuses 218 in der Kontaktrichtung 178 eine Steckverbindung zwischen dem Steckkontaktanschluss 208 und dem Signalleitungsanschluss 170 herstellbar ist und die gehäuseseitigen Führungselemente 288 in Eingriff mit den abdeckelementseitigen Führungselementen 284 bringbar und vorzugsweise mit denselben verrastbar sind.

Für Wartungs- und/oder Reparaturzwecke kann das Überwachungseinheit-Gehäuse 218 einfach in umgekehrter Richtung verschoben und somit von dem Abdeckelement 108 gelöst werden, wobei zugleich die Steckverbindung zwischen dem Steckkontaktanschluss 208 der Überwachungseinheit 167 und dem Signalleitungsanschluss 170 des Signalleitungssystems 106 aufgehoben wird.

Im Übrigen stimmt die in den Fig. 17 bis 25 dargestellte dritte Ausführungsform des Zellkontaktierungssystems 100 hinsichtlich Aufbau, Funktion und Herstellungsweise mit der in den Fig. 8 bis 16 dargestellten zweiten Ausführungsform überein, auf deren vorstehende Beschreibung insoweit Bezug genommen wird.

## Patentansprüche

1. Zellkontaktierungssystem (100) für eine elektrochemische Vorrichtung (111), die mehrere elektrochemische Zellen (113) umfasst, wobei das Zellkontaktierungssystem (100)
ein Stromleitungssystem (104) mit einem oder mehreren Zellverbindern (116) zum elektrisch leitenden Verbinden von Zellterminals (115) verschiedener elektrochemischer Zellen (113),
ein Signalleitungssystem (106) mit einer oder mehreren Signalleitungen (152) zum elektrisch leitenden Verbinden jeweils einer Signalquelle (154) mit einem Signalleitungsanschluss (170) des Zellkontaktierungssystems (100) und
eine Überwachungseinheit (167) zur Überwachung von Signalen der Signalquellen (154) umfasst,
wobei die Überwachungseinheit (167) einen Steckkontaktanschluss (208) umfasst, der durch eine Steckverbindung unmittelbar mit dem Signalleitungsanschluss (170) des Signalleitungssystems (106) verbindbar ist,
**dadurch gekennzeichnet,**
**dass** der Signalleitungsanschluss (170) einen Signalstecker oder eine Signalbuchse umfasst und dass die Überwachungseinheit (167) eine zu dem Signalstecker des Signalleitungsanschlusses (170) komplementäre Signalbuchse bzw. einen zu der Signalbuchse des Signalleitungsanschlusses (170) komplementären Signalstecker umfasst und
**dass** die Überwachungseinheit (167) einen Signalanschluss (144) zum Anschließen einer Verbindungsleitung zu einer Überwachungseinheit (167) eines anderen Zellkontaktierungssystems (100) oder zu einer zentralen Überwachungsvorrichtung umfasst,
wobei das Zellkontaktierungssystem (100) ein Trägerelement (102), welches das Stromleitungssystem (104) und das Signalleitungssystem (106) trägt, umfasst und der Signalleitungsanschluss (170) an dem Trägerelement (102) festgelegt ist,
wobei das Zellkontaktierungssystem (100) ein lösbar an dem Trägerelement (102) festgelegtes Abdeckelement (108) umfasst und
wobei das Stromleitungssystem (104), das Signalleitungssystem (106) und die Überwachungseinheit (167) zumindest teilweise zwischen dem Trägerelement (102) und dem Abdeckelement (108) angeordnet sind.

2. Zellkontaktierungssystem nach Anspruch 1, **dadurch gekennzeichnet, dass** der Signalleitungsanschluss (170) des Signalleitungssystems (106) ein Anschlussgehäuse (172) umfasst, wobei an dem Anschlussgehäuse (172) mindestens ein Anschlusspin (180) zum Anschließen einer Signalleitung (152) festgelegt ist.

3. Zellkontaktierungssystem nach Anspruch 2, **dadurch gekennzeichnet, dass** mindestens ein Anschlusspin (180) gekrümmt ausgebildet ist.

4. Zellkontaktierungssystem nach einem der Ansprüche 2 oder 3, **dadurch gekennzeichnet, dass** das Anschlussgehäuse (172) des Signalleitungsanschlusses (170) eine Aufnahme für ein Anschlussgehäuse (202) des Steckkontaktanschlusses (208) umfasst, wobei an dem Anschlussgehäuse (202) des Steckkontaktanschlusses (208) mindestens ein Anschlusspin (200) festgelegt ist.

5. Zellkontaktierungssystem nach einem der Ansprüche 1 bis 4, **dadurch gekennzeichnet, dass** das Trägerelement (102) und/oder das Abdeckelement (108) mindestens ein Positionierelement (210) umfasst, welches mit der Überwachungseinheit (167) in Eingriff steht.

## Claims

1. Cell contact-making system (100) for an electrochemical device (111) which comprises a plurality of electrochemical cells (113), wherein the cell contact-making system (100) comprises
a current conductor system (104) having one or more cell connectors (116), for electrically conductively connecting cell terminals (115) of different electrochemical cells (113),
a signal conductor system (106) having one or more signal conductors (152) for electrically conductively connecting a respective signal source (154) to a signal conductor terminal connector (170) of the cell contact-making system (100), and
a monitoring unit (167) for monitoring signals from the signal sources (154),
wherein the monitoring unit (167) comprises a plug contact terminal connector (208) which is directly connectable by a plug connection to the signal conductor terminal connector (170) of the signal conductor system (106),
**characterized in that**
the signal conductor terminal connector (170) comprises a signal plug or a signal socket, and **in that** the monitoring unit (167) comprises a signal socket that is complementary with the signal plug of the signal conductor terminal connector (170), or a signal plug that is complementary with the signal socket of the signal conductor terminal connector (170), and
**in that** the monitoring unit (167) comprises a signal terminal connector (144) for connecting a connection line to a monitoring unit (167) of another cell contact-making system (100) or to a central monitoring device,
wherein the cell contact-making system (100) comprises a support element (102) that carries the current conductor system (104) and the signal conductor system (106), and the signal conductor terminal connector (170) is fixed to the support element (102),
wherein the cell contact-making system (100) comprises a cover element (108) that is releasably fixed to the support element (102), and
wherein the current conductor system (104), the signal conductor system (106) and the monitoring unit (167) are arranged at least partly between the support element (102) and the cover element (108).

2. Cell contact-making system in accordance with Claim 1, **characterized in that** the signal conductor terminal connector (170) of the signal conductor system (106) comprises a terminal connector housing (172), wherein at least one terminal connector pin (180) is fixed to the terminal connector housing (172), for connecting a signal conductor (152).

3. Cell contact-making system in accordance with Claim 2, **characterized in that** at least one terminal connector pin (180) is of curved configuration.

4. Cell contact-making system in accordance with either of Claims 2 or 3, **characterized in that** the terminal connector housing (172) of the signal conductor terminal connector (170) comprises a receptacle for a terminal connector housing (202) of the plug contact terminal connector (208), wherein at least one terminal connector pin (200) is fixed to the terminal connector housing (202) of the plug contact terminal connector (208).

5. Cell contact-making system in accordance with any one of Claims 1 to 4, **characterized in that** the support element (102) and/or the cover element (108) comprise/comprises at least one positioning element (210) that engages with the monitoring unit (167).

## Revendications

1. Système de contact de cellules (100) pour un dispositif électrochimique (111), qui comprend plusieurs cellules électrochimiques (113), le système de contact de cellules (100) comprenant
un système de ligne de courant (104) avec un ou plusieurs connecteurs de cellules (116) pour relier de manière électriquement conductrice des terminaux (115) de différentes cellules électrochimiques (113),
un système de ligne de signal (106) avec une ou plusieurs lignes de signal (152) pour relier de manière électriquement conductrice respectivement une source de signal (154) à une borne de ligne de signal (170) du système de contact de cellules (100) et
une unité de surveillance (167) pour surveiller des signaux des sources de signal (154),
l'unité de surveillance (167) comprenant une borne pour contact à fiche (208) pouvant être reliée directement à la borne de ligne de signal (170) du système de ligne de signal (106) par un connecteur enfichable,
**caractérisé en ce**
**que** la borne de ligne de signal (170) comprend un connecteur de signal ou une prise de signal et en ce que l'unité de surveillance (167) comprend une prise de signal complémentaire du connecteur de signal de la borne de ligne de signal (170) ou un connecteur de signal complémentaire à la prise de signal de la borne de ligne de signal (170), et
**que** l'unité de surveillance (167) comprend une borne de signal (144) pour connecter un câble de liaison à une unité de surveillance (167) d'un autre système de contact de cellules (100) ou à un autre dispositif de surveillance central,
le système de contact de cellules (100) comprenant un élément de support (102) qui supporte le système de ligne de courant (104) et le système de ligne de signal (106), et la borne de ligne de signal (170) étant fixé sur l'élément de support (102),
le système de contact de cellules (100) comprenant un élément de recouvrement (108) fixé de manière détachable sur l'élément de support (102), et le système de ligne de courant (104), le système de ligne de signal (106) et l'unité de surveillance (167) étant disposés, du moins en partie, entre l'élément de support (102) et l'élément de recouvrement (108).

2. Système de contact de cellules selon la revendication 1, **caractérisé en ce que** la borne de ligne de signal (170) du système de ligne de signal (106) comprend un boîtier de raccordement (172), au moins une broche de raccordement (180) pour le raccordement d'une ligne de signal (152) étant fixée sur le boîtier de raccordement (172).

3. Système de contact de cellules selon la revendication 2, **caractérisé en ce qu'**au moins une broche de raccordement (180) est courbe.

4. Système de contact de cellules selon l'une quelconque des revendications 2 ou 3, **caractérisé en ce que** le boîtier de raccordement (172) de la borne de ligne de signal (170) comprend un logement pour un boîtier de raccordement (202) de la borne pour contact enfichable (208), au moins une broche de raccordement (200) étant fixée sur le boîtier de raccordement (202) de la borne pour contact enfichable (208).

5. Système de contact de cellules selon l'une quelconque des revendications 1 à 4, **caractérisé en ce que** l'élément de support (102) et/ou l'élément de recouvrement (108) comprend/comprennent au moins un élément de positionnement (210) qui est en prise avec l'unité de surveillance (167).
